# EUROPEAN PATENT SPECIFICATION

(11) **EP 0 958 035 B1**
(45) Date of publication and mention of the grant of the patent: **07.11.2012**
(21) Application number: 97942879.4
(22) Date of filing: 26.08.1997
(51) Int. Cl.: B01D 39/16, B01D 29/11, C12M 1/12, B01D 15/08, B01J 20/00, B01D 67/00, B01L 3/00, B01L 3/02, B01D 69/06

(54) **METHOD FOR PRODUCING MICROPOROUS ELEMENTS, THE MICROPOROUS ELEMENTS THUS PRODUCED AND USES THEREOF**
VERFAHREN ZUM HERSTELLEN MIKROPORÖSER ELEMENTE, DAS DURCH DAS VERFAHREN ERHÄLTLICHE MIKROPORÖSE ELEMENT UND VERWENDUNG DES MIKROPORÖSEN ELEMENTES
PROCEDE DE PRODUCTION D'ELEMENTS MICROPOREUX, ELEMENTS MICROPOREUX PRODUITS SELON CE PROCEDE ET LEURS UTILISATIONS

(30) Priority: 26.08.1996 EP 96113653; 17.12.1996 EP 96120279
(43) Date of publication of application: 24.11.1999
(73) Proprietor: Mehl, Ehrenfried, Dr., 81479 München (DE); Lottspeich, Friedrich, Dr., 82131 Stockdorf (DE)
(72) Inventor: MEHL, Ehrenfried, D-81479 München (DE); LOTTSPEICH, Friedrich, D-82131 Stockdorf (DE); DÜSTERHÖFT, Andreas, D-40724 Hilden (DE); MANZ, Thomas, D-40237 Düsseldorf (DE)
(74) Representative: Vossius & Partner
(86) International application number: PCT/EP1997/004653
(87) International publication number: WO 1998/008594

(56) References cited:
- EP-A- 0 118 735
- EP-A- 0 312 394
- EP-A- 0 413 552
- EP-A- 0 505 118
- EP-A- 0 532 282
- EP-A- 0 588 564
- WO-A-87/01956
- DE-A- 3 927 787
- DE-A- 3 939 867
- US-A- 3 865 548
- US-A- 4 540 625
- US-A- 5 156 811
- ULLMANN'S ENCYCLOPEDIA OF INDUSTRIAL CHEMISTRY, VOL. A 16, FIFTH EDITION, VCH VERLAGSGESELLSCHAFT, WEINHEIM, 1990, PAGES 215-230 , XP002057828
- KIRK-OTHMER: ENCYCLOPEDIA OF CHEMICAL TECHNOLOGY, VOL. 15, THIRD EDITION, JOHN WILEY & SONS, NEW YORK, 1981, PAGES 101-107, 115, XP002057829

## Description

The present invention relates to novel methods for producing filter devices comprising microporous elements and filter devices comprising microporous elements obtainable by such methods. The microporous elements may comprise solid microparticles, which preferably modify the adsorptive properties of the microporous element. The microporous elements are linked to a support and/or a retainer. Furthermore, the present invention relates to kits, diagnostic and pharmaceutical compositions comprising the aforementioned filter devices. Furthermore, the present invention relates to the use of the aforementioned devices filter in microfiltration, chromatography, adsorption/immobilization of organic and inorganic compounds as well as for the preparation and/or detection of such compounds.

There is an increasing demand in the area of analytical chemistry for devices capable of handling moderate to small sample volumes, in a manner which is rapid, gives high recovery and minimizes any possibility of sample contamination. Among other desired attributes are low cost, ease of manufacture and suitability for application with conventional equipment. Previous devices for micro filtration etc. involve the use of preformed filter material. Synthetic polymers such as nylon, methacrylate or semisynthetic polymers such as nitro cellulose, or cellulose acetate have been used over decades. Mostly the filter material is a nonwoven material which is formed from a web of synthetic or natural fibers. The fibers may or may not be bonded together by a binder. In general, discs are cut from the nonwoven material and positioned within a sample tube or the like. Problems in connection with this previous approach include an insufficient contact of the pre-cut filter disc to the wall of the filter tube leaving small gaps and thereby allowing the applied liquid sample to escape.
In this context, the filter disc may be attached to the filter tube by an adhesive; additionally or alternatively, the filter disc may be welded into the filter tube by locally applying heat or by ultrasonic treatment If the filter disc is attached to the filter tube by an adhesive, the adhesive may influence the filter properties of the material in an uncontrollable manner. The same holds true when the filter disc is welded into the filter tube by locally applying heat or by ultrasonic treatment. The problems discussed above are enhanced when the overall size of the filter element is reduced. It has therefore hitherto not been technically feasible to produce satisfactory filter elements with apertures of a diameter as low as several micrometer.
When using an adsorptive filter containing granular adsorptive microparticles, the problem of dislocation might occur during processing of a liquid and also during transportation. Therefore, the microparticles are held for example in between two confining porous elements, such as frits, nets, annular or grooved retainers at both porous sides of the filter element Even when embedded between fibers of teflon or glass, an upper porous retainer as well as a lower supporting frit, net or grooved element might be necessary.

WO 87/01956 discloses a filter comprising a nonporous support member open at one end and a porous disc rigidly secured to the support member at an opposite end. WO 93/07945 relates to a continuous liquid chromatographic column containing a separation medium in the form of a macroporous polymer plug disposed in the column across its internal cross-sectional area and produced by polymerizing specific monomers in the presence of an initiator and a porogen. EP 471 420 A2 discloses a filter device comprising a hollow enlongate member and a filter means positioned in the elongate member. DE 37 17 211 A1 discloses a device for the separation and the purification of molecules by means of a matrix which matrix is provided in a conical hollow member. EP 264 740 A2 relates to a pipetting device, to pipette tips and to filter devices which may be present in the pipette tip. US 4,675,299 concerns a self-contained reagent package device for an assay comprising a support member and a plurality of wells in the support member. At least one of the wells has an aperture at its bottom end and includes a carrier to which a reagent is bound and a porous filter positioned between the carrier and the aperture.

Thus, the technical problem underlying the present invention is to provide a cost-effective method for producing a filter device, which can be applied for most versions of analytical or micro preparative liquid chromatography such as ion exchange chromatography, reverse phase chromatography, hydrophobic interaction chromatography, adsorption chromatography at silica gels, affinity chromatography, immuno chromatography, for binding studies, the isolation of multi component binding complexes, for the screening of samples or for preventing the dislocation of microparticles, improved or simplified by applying selected suitable techniques, avoiding unspecific loss of biopolymers like peptides, proteins, nucleic acids, oligonucleotides, polysaccharides or derivatives thereof by presenting biocompatible surfaces, and saving cost by using expensive microparticle material in very small amounts. In addition transfer of separated substances from the filter to blotting membranes shall be rendered possible without having problems with dead volumes.
The solution to the technical problem is achieved by providing the embodiments characterized in the claims.

Accordingly, the present invention relates to a method for producing a filter device as defined in the annexed claim 1, with preferred embodiments being set forth in the dependent claims.

In context with the present invention, the term "solidification in spongy form" means that the product contains void spaces.

In the method of the present invention, the substance is present in a liquid phase. Said liquid phase may be a solution or suspension of a polymer in a solvent and the solidification in spongy form is preferably caused by the action of a non-solvent for the polymer.

For a purpose of the present invention, the term "polymer" means natural or artificial substances made up of large molecules which are themselves made from combinations of small simple molecules which are identical or not, i.e. homo- and co-polymers. Polymers according to the present invention include also resins.

In a preferred embodiment the polymer is selected from the group consisting of polyvinyl esters, partially deacylated polyvinyl esters, cellulose derivatives, polyamides, polystyrene, poly(methyl methacrylate) and mixtures thereof. Preferably, said polymer comprises both hydrophilic and hydrophobic segments within its molecules.

In a particularly preferred embodiment the method of the present invention, the polymer is selected from the group consisting of poly(vinyl alcohol-co-ethylene), poly(vinyl alcohol-co-vinylacetate), ethylene acrylic acid copolymer, ethylene acrylic ester copolymer, ethylene acrylamide copolymer, acrylic acid vinylacetate copolymer, acrylamide vinylacetate copolymer, copolymer of acrylic acid ethylene diamine monoamide with vinylacetate, poly(vinyl alcohol-co-styrene), poly(styrene-co-maleic acid) and glycerol ester derivatives thereof, acrylamide acrylic ester copolymer, and mixtures thereof.

In another preferred embodiment the method of the present invention the solvent is selected from the group consisting of dimethyl sulfoxide, dimethylformamide, dimethylacetamide, formamide, formic acid, acetic acid, 2,2,2-trichloro ethanol, toluene, tetrahydrofuran and mixtures thereof.

In a further preferred embodiment the solvent is comprised of at least two volatile non-solvents. Preferably, said solvent is removable at ambient temperatures or vacuum.

In a further preferred embodiment of the method of the present invention the solidification is achieved by evaporating the solvent and/or non-solvent. Preferably, the nonsolvent is selected from the group consisting of water, alcohols having 1 to 4 carbon atoms, ammonia, ethylacetate, acetone, ethylene diamine, and mixtures thereof.

In another embodiment of the method according to the present invention the liquid phase is a hydrocolloid.

In a preferred embodiment the hydrocolloid is selected from the group consisting of low melting agarose, starch, polyvinyl alcohol, and mixtures thereof.

In a further preferred embodiment the layer of hydrocolloid solution is subjected to crosslinking by sodium tetraborate.

In another preferred embodiment the solidified hydrocolloid is desiccated and/or crosslinked.

In another embodiment of the method according to the present invention the liquid phase is a solution or suspension of one or more monomer(s) and the solidification is caused by polymerizing said monomer.

In a preferred embodiment the monomer(s) is (are) present in a solvent. Preferably, the monomer(s) comprise(s) one or more crosslinking monomers.

In a particularly preferred embodiment said monomers comprise a diamine and a diepoxide.

In a further preferred embodiment of the method according to the present invention, the monomer is selected from the group consisting of vinylesters, acrylic acid and its derivatives, and polymerization is effected under the influence of free radicals.

In a further embodiment of the method according to the present invention the substance is permeated with a channel-sparing fluid or with reversible hydrogel or with liquids such as polypropylenglykol of 4000 Dalton or higher being insoluble in water at temperatures above 20°. Preferably, the channel-sparing fluid is silicon oil, water or air.

In another embodiment of the method according to the present invention the substance is thermoplastic polymer and the solidification is caused by sintering, e.g. by heating or the action of a solvent. Preferably, the polymer is a styrene-maleic acid copolymer or polyvinylacetate.

In a further embodiment of the method according to the present invention the substance further comprises solid microparticles, preferably having a size from 0.01 µm to 500 µm. Regarding size, porosity and adsorbent characteristics, one microporous element may be made up of different types of microparticle which may be immobilized in a layered order. The microparticles such as adsorbent particles are commercially available. Some are made of inorganic material like calcium phosphate, silica gel or oxides of silicon, aluminum, titan, zirconium or, consist of an microporous inorganic core with a surface layer of organic polymer, providing anionic and cationic groups for ion exchange chromatography or hydrophobic groups for reversed phase- and hydrophobic interaction chromatography. The microparticles may be also derivatized such that they meet the requirements of specific binding of affinity chromatography of proteins, polypeptides, nucleic acids, oligonucleotides, polysaccharides and other organic substances. By covalent binding, or by non-covalent binding such as tag-binding, these substances themselves may be used to form an affinity matrix, in addition to, e.g., antibodies, avidin and lectins.

In a preferred embodiment the substance and the microparticles are present as a suspension in a non-solvent of low viscosity.

Said substance and said microparticles can be solidified, for example by evaporating from a very diluted solution in a poor solvent or, by sintering at moderate temperatures up to 130°C without polymer solution, using only partially molten polymer instead.

In a preferred embodiment of the above-described method of the invention said microparticles modify the adsorptive properties of the final microporous element, preferably useful for ion exchange chromatography, reverse phase chromatography, hydrophobic interaction chromatography, adsorption chromatography at silica gels and/or affinity chromatography.

In a further embodiment of the method of the present invention the microparticles are designed to have a preselected property. Thus, the microparticles may contain, e.g. an effector molecule. Examples of such a molecule include amino acid sequences designed to sequester ions, which makes the molecule suitable for use as an imaging agent, and sequences designed to facilitate immobilization of the microparticles for use, e.g., in affinity chromatography and solid phase immunoassay. Another example of such a molecule is a bioactive effector molecule, that is a protein having a conformation suitable for biological and/or enzymatic activity, such as an enzyme, toxin, receptor, binding site, growth factor, cell differentiation factor, cytokinin, hormone, or anti-metabolite.

In a preferred embodiment said microparticles comprise an effector molecule capable of sequestering an ion, selectively binding to a solid support, binding to a preselected antigenic determinant or being a ligand. For example, said molecule may comprise an enzyme or remotely detectable moiety and/or a sequence of amino acids, nucleic acids or analogs or derivatives thereof.

Preferably, said molecule capable of sequestering an ion is calmodulin, metallothionein, a fragment thereof, or an amino acid sequence rich in at least one of glutamic acid, aspartic acid, lysine and arginine and said effector molecule capable of binding to a preselected antigenic determinant is an antibody or fragment or a derivative thereof. These antibodies can be monoclonal antibodies, polyclonal antibodies or synthetic antibodies as well as fragments of antibodies, such as Fab, Fv or scFv fragments etc. Monoclonal antibodies can be prepared, for example, by the techniques as originally described in Köhler and Milstein, Nature 256 (1975), 495, and Galfré, Meth. Enzymol. 73 (1981), 3, which comprise the fusion of mouse myeloma cells to spleen cells derived from immunized mammals. Furthermore, antibodies or fragments thereof to antigens can be obtained by using methods which are described, e.g., in Harlow and Lane "Antibodies, A Laboratory Manual", CSH Press, Cold Spring Harbor, 1988. These antibodies can be used, for example, for the immunoprecipitation and immunolocalization of the desired antigen as well as for the monitoring of the presence of such antigens, for example, in recombinant organisms, and for the identification of compounds interacting with the antigen. For example, surface plasmon resonance as employed in the BIAcore system may be combined with a microporous element of the invention to increase the efficiency of phage antibody selections, yielding a high increment of affinity from a single library of phage antibodies which bind to an epitope of the antigen (Schier, Human Antibodies Hybridomas 7 (1996), 97-105; Malmborg, J. Immunol. Methods 183 (1995), 7-13).

Furthermore, said molecule capable of selective binding to a solid support can be, e.g., GST, His-tag, Lex-A, MBP and said ligand, e.g., Ni-NTA.

In a still further embodiment of the method of the present invention the substance is self-sustaining and applied to a support.

A "support" in accordance with the present invention is in the form of a tube having an aperture suitable for applying the substance so as to form a preferably self-sustaining layer over the cross section of the aperture.

Preferably, the support is formed of polypropylene (PP), polyethylene (PE), propylenelethylene copolymer, polyvinyl acetate, polyamide, polystyrene, polyethylene terephthalate (PET), polyether etherketon (PEEK), polycarbonate, polyethylene vinylacetate, poly(vinyl alcohol-co-ethylene), polyester, polyamide, glass, ceramics, quartz, silicon nitride, or mixtures thereof, or composite materials thereof with fibers or frames of glass, silicon dioxide, carbon or ceramics.

The support has the form of a tube, and the microporous element is preferably generated at or near to one edge of the tube. Preferably, at least a section of the tube is of conical form, having a smaller and a larger cross-section end, and the microporous element is generated at or near to the smaller cross-section end.

The step of applying the solution to the aperture may be accomplished by allowing the solution to ascend in the tube by capillary action.

The inner wall of the tube may be coated with a hydrophilic coating while the edge of the tube next to the microporous element may be kept free of hydrophilic coating or not. Preferably, the coating is formed by applying a solution of one or more polyvinyl esters in an organic solvent to the inner wall of the tube, allowing the organic solvent to evaporate, and partially hydrolyzing the resulting layer of polyvinyl ester at the surface thereof.

The diameter of the aperture of the support can be from 0.02 mm to 4 mm.

In the method according to the present invention the substance is applied to a retainer.

In a preferred embodiment the microporous retainer is formed of polyethylene (PE), polypropylene (PP), propylene/athylene copolymer, polyvinyl acetate, polyamide, polystyrene, polyethylene terephthalate (PET), polyether etherketon (PEEK), polycarbonate, poly(vinyl alcohol-co-ethylene), polyester, polyamide, glass, ceramics, quartz, silicon, silicon nitride, or mixtures thereof, stainless steel, or composite materials thereof with fibers or frames of glass, silicon dioxide, carbon or ceramics.

Said microporous retainer is preferably in the form of a disc, grid, large-pore membrane, membrane with supporting fabric, membrane with woven or unwoven characteristics, net, plate, rod and/or truncated cone.

The microporous element is generated within the support.

In a preferred embodiment of the methods described above the support is hollow moisture-impervious.

In a preferred embodiment the method according to the present invention further comprises the step of arranging at least one microporous membrane at the microporous retainer. Preferably, the microporous membrane is formed of (regenerated) cellulose, polyamide, polyester, polypropylene (PP) or polytetrafluorethylene (PTFE, Teflon®).

Furthermore, the present invention relates to a microporous element obtainable according to a method of the invention as described above. Preferably, the microporous element according to the present invention is in the form of a disc, grid, membrane with supporting fabric, membrane with woven or unwoven characteristics, net, plate, rod or truncated cone.

The present invention relates to a filter element comprising the microporous element described above.

The microporous retainer in the filter element according to the present invention contains in its pores the polymer in such a manner that the pores have residual free spaces forming channels allowing the flow of a fluid through the filter element.

In a particularly preferred embodiment the filter element according to the present invention the average diameter of the microparticles is less than 50% of the average diameter of the pores.

Another embodiment of the present invention relates to a multiple channel filter element, comprising a plurality of filter elements according to the present invention. This embodiment is particularly suitable for high throughput screening of samples and can be employed, for example, for forensic analysis, high throughput nucleic acid preparation, sample preparation for diagnostic application or drug screening application, which usually requires the analysis of many samples.

A kit according to the present invention may further contain compounds and/or devices which are suitable, for example, for the preparation or purification of biomolecules like proteins, peptides, nucleic acids, oligonucleotides, polysaccharides or derivatives thereof. Also, for example, devices such as syringes or hollow needles may be comprised in the kit of the invention.

The present invention also provides for the use of a filter element described herewith for any kind of micro filtration, solid-liquid separation, clearing of solutions, harvesting of pro- and eukaryotic cells, removal and purification of cellular fragments and debris, immobilization of fragments, viruses and plasmids, adsorption/immobilization of proteins, polypeptides, nucleic acids, oligonucleotides or as retainer for granular material, as used in affinity chromatography, immuno chromatography, for binding studies, the isolation of multi component binding complexes, for the screening of samples, or for preventing the dislocation of microparticles. Furthermore, the filter elements of the invention can be used, for example, as filter elements to reduce the emission and/or presence of undesired substances such as odorous and toxic substances. For this purpose, the filter elements of the invention comprise suitable adsorptive substances such as charcoal contained, for example, in the microparticels. Furthermore, the filter elements of the invention can be used in the preparation of starch graft polymers. These products having a backbone of starch and a side lattice of a synthetic monomer grafted on according to the principle of radical chain mechanism. The starch graft polymers available nowadays are characterized by an improved binding and retaining capability of up to 1000 g water per g starch at a high viscosity. In the last few years, these super absorbers have been used mainly in the hygiene field, e.g. in products such as diapers and sheets, as well as in the agricultural sector, e.g. in seed pellets.

In a particularly preferred embodiment of the use of the invention the microporous or filter element is used for the preparation and/or detection of compounds comprising nucleic acids, proteins, organic compounds, or derivatives or analogs thereof such as peptidomimetics or PNA. Said compound can be derived from natural or non-natural sources. Natural sources comprise organisms, i.e. cell and tissues of such organism as well as samples derived from the natural environment. Non-natural sources include enzymatic products generated in vitro and chemically synthesized. It is directly evident for the person skilled in the art that the microporous and filter elements of the present invention are suitable for the isolation, purification and/or detection of any desired compound derived, e.g. from a cell including DNA, RNA, protein and other cell components: Furthermore, it is possible to isolate and identify aggregates and complexes of such compounds. Besides, the isolation and purification of such compounds from natural sources, e.g. from samples of a cell, body fluids, air, water and soil, it is envisaged to employ the microporous and filter elements of the invention for the purification of synthetically produced compounds.

Further use of the filter elements of the present invention comprise the use in assays or detection of specific binding partners. For this purpose, at least one agent supposed to be capable of binding to at least one binding partner is comprised in the microporous element used in the invention or for example linked with the microparticles. The microporous element either alone or in any of the above described embodiments then is contacted with a sample suspected to contain at least one binding partner for the agent. Specific binding partners may then be released from the microporous element and detected by methods known to those skilled in the art. Thus, the filter elements of the present invention can be used for the isolation and/or detection of, e.g. receptors bound to their ligands and for the preparation of so-called "ligand traps". Furthermore, once, a complex or for example a receptor ligand complex is trapped in the microporous element used in the present invention, a further sample of compounds can be contacted with said microporous element in order to identify compounds which interfere with the binding of said receptor and its ligand. Said compound can then be used as antagonist or agonist of one of the binding partners depending on the action of said compound exhibited in vivo. Furthermore, the filter elements of the present invention can be used for pharmaceutical screening for ligands of low molecular weight in ultrafiltrates that are capable of forming specific complexes with nucleic acids or proteins like recombinant receptor proteins applying, preferably, the multicolumn multichannel filter plate of the invention for removal of free ligands and for blotting-transfer of the complexed ligand to an attached membrane matrix or target plate for further analysis by known analytical techniques such as mass-spectrometry including the MALDI technique. Since assays using the filter elements of the present invention can be performed at low cost and high throughput, it is furthermore expected that the microporous and filter elements of the present invention can substitute devices such as gel electrophoresis of nucleic acids and proteins or systems for the detection of specific binding partners such as the two-hybrid-system.

Thus, filter elements of the present invention can also be used with for the high throughput screening of combinatorial nucleic acid or peptide libraries or, for example, for the use of solid phase PCR.

The method for producing a filter element according to the present invention may be performed in combination of any one of the embodiments described above. For example, by generating a microporous element within an aperture of a solid moisture-impervious support, comprising the steps of applying a liquid phase to the aperture so as to form a self-sustaining liquid layer over the cross-section of the aperture; and causing solidification in spongy form of at least part of the liquid phase. Accordingly, the microporous element is generated in situ from a liquid precursor. The liquid precursor readily takes a shape that matches the shape of the aperture in the support. Any imperfections like burrs etc. of the aperture are hereby compensated for. Upon solidification, a microporous element is obtained, which snugly fits into the aperture of the support and has complete circumferential contact to the walls thereof.

Preferably, the support is formed of a plastic such as polypropylene, polyethylene, propylene/ethylene copolymer, polyvinyl acetate, polyamide, polystyrene, polyethylene terephthalate, polyether etherketon (PEEK), polycarbonate, polyethylene vinylacetate, polyester, polyimide, or mixtures thereof. Also included are composite materials of plastic with fibers or frames of glass, silicon dioxide, carbon or ceramics.

The support has the form of a tube, preferably with circular cross-section, and the microporous element is usually generated at or near to one edge of the tube. In order to facilitate sample application and for accommodation of greater sample volumes, preferably at least a section of the tube is of conical form, having a smaller and a larger cross-sectional end, with the microporous element generated at or near to the smaller cross-sectional end. For example, the support is a pipette tip such as commonly used with Eppendorf pipettes. In order to prevent dislocation, such as slipping, of the microporous element forme, the tube may have a structured inner surface, like a surface with rings or grooves.

It is also envisaged to arrange a plurality of supports, e.g., up to several hundreds, in parallel alignment to form a multiple channel filter element. The multiple channel filter element will allow a biological sample to be tested simultaneously against hundreds of reagents. Alternatively, the support can comprise a plurality of apertures, e.g., in the form of parallel bores or tapered holes. When the multiple channel element is to be evaluated optically, it is convenient to include an opacifying agent such as carbon black into the support material to prevent interference from neighboring channels.

There are several possibilities of applying the liquid phase to the aperture of the support. The various methods will be exemplified with reference to a tubular support but will not be limited thereto. As the liquid phase in general is a solution the terms "liquid phase" and "solution" will be used interchangeably unless otherwise required by the context. Conveniently, application of the solution to the aperture is accomplished by allowing the solution to ascend in the tube by capillary action. The support, for example a tube, is dipped into the solution and raised again. Due to the surface tension of the solution, a liquid layer will remain in the aperture over the cross-section of the aperture. If, for example, the viscosity of the solution is too high different methods for applying the solution to the aperture may be adopted. The ascending force of the solution may be enhanced by temporarily sealing the distant end of the tube, slightly heating the tube, then dipping the tube with its free end into the solution, and allowing the tube to cool to ambient temperature, whereby the solution is drawn into the tube by the volume contraction of the enclosed air. Alternatively, the solution can be introduced from the distant end of the tube and may be brought into its final position by centrifugation. Preferably, the end at or near to which the microporous element is to be formed is sealed with a cap or by pressing against an elastic plate. The cap or the elastic plate preferably has microgrooves or micropores for allowing the enclosed air to escape. Then the arrangement is subjected to centrifugation during which the solution migrates to the end of the tube where it is retained at least partially by the cap or elastic plate. The cap or the elastic plate may be removed before or after solidification, in particular before solidification of the solution or of a part of the solution.

The practitioner often faces the problem that aqueous samples that are introduced in containers made of hydrophobic material tend to adhere to the wall in drops rather than flowing down and collecting at the bottom. In order to avoid this phenomena, the inner wall of a tube which acts as support for a filter element according to the invention, is coated with a hydrophilic coating. The hydrophilic coating will prevent aqueous samples from adhering to the wall of the support tube. Also, there is no adsorptive loss of biopolymers due to adsorption to the wall of the support. The edge of the tube next to the microporous element is preferably kept free of hydrophilic coating. This will prevent sample liquids which exit from the edge of the tube next to the microporous element from creeping to adjacent filter elements, especially in the embodiment of the present invention where a plurality of filter elements is arranged to form a multiple channel filter element.

The hydrophilic coating is conveniently prepared by applying a solution of one or more polyvinyl esters in an organic solvent to the inner wall of the tube, allowing the organic solvent to evaporate, and optionally partially hydrolyzing the resulting layer of polyvinyl ester at the surface thereof. Suitable polyvinyl esters include polyvinyl acetate (a molecular weight of about 500000 is generally suitable), polyvinyl propionate and polyvinyl stearate.

Partial hydrolysis of the layer of polyvinyl ester is performed by contacting the layer of polyvinyl ester with an alkaline aqueous solution, such as sodium hydroxide. The edge of the tube next to the microporous element can be kept free of hydrophilic coating by applying the solution of polyvinyl ester only to a part of the inner wall of the tube, for example by partially immersing the tube into the solution of polyvinyl ester. After hydrolysis, the microporous element can be generated at or near to the edge of the tube, that has not been brought into contact with the polyvinyl ester solution. Alternatively, the entire inner wall of the tube can be coated with polyvinyl ester, but only part thereof is hydrolyzed.

Alternatively, the hydrophilic coating can be generated by using a high molecular weight polypropylene glycol, for example having a molecular weight of 4000 or higher. Such polypropylene glycols show moderate to good solubility in cold water, however poor solubility in warm water. Accordingly, a cold aqueous solution of polypropylene glycol, for example at 0° to 4°C, might be introduced into the tube and subsequently the temperature is raised, for example to about 20°C. The polypropylene glycol coming out of the solution shows a high affinity to the inner wall of the tube and deposits thereon as a thin layer. Excess polypropylene glycol solution is then removed. Additional chemical crosslinking may be advantageous in some cases.

Employing the method(s) according to the present invention, filter elements having an aperture of a diameter from 0.02 mm to 4 mm, in particular from 0.2 to 2.0 mm, can be produced.

The method of the present invention for producing filter elements of the invention may comprise the steps of providing a liquid suspension of microparticles; applying the liquid suspension to at least one microporous retainer, and causing solidification in spongy form of at least part of the suspension.

The microparticles may be linked together with each other and may be linked to the at least one microporous retainer under maintenance of microporosity.

The method according to the present invention for producing a filter element by generating a microporous element may comprise the steps of providing a solution of a. synthetic or semi-synthetic resin in a solvent, including microparticles suspended therein; applying the solution to at least one microporous retainer, and causing a nonsolvent to diffuse into the layer, which nonsolvent is miscible with the solvent, whereby the synthetic resin precipitates to form the microporous element.

Preferably the resin is selected from the group consisting of polyvinyl esters, partially deacylated polyvinyl esters, cellulose derivatives, polyamides, and mixtures thereof. Among polyvinyl esters polyvinyl acetate, polyvinyl propionate, polyvinyl stearate, and polyvinyl cinnamic acid ester; among cellulose derivatives nitrocellulose, and cellulose propionate are to be mentioned. A suitable polyamide is Nylon 6/6.

In certain instances, the resin preferably comprises both hydrophilic and hydrophobic segments within its molecules. Suitable resins include poly(vinyl alcohol-co-ethylene), poly(vinyl alcohol-co-vinylacetate), ethylene acrylic acid copolymer, ethylene acrylic ester copolymer, ethylene acrylamide copolymer, acrylic acid vinylacetate copolymer, acrylamide vinylacetate copolymer, copolymer of acrylic acid diamine monoamide with vinylacetate, poly(vinyl alcohol-co-styrene), acrylamide acrylic ester copolymer, and mixtures thereof. Specifically, copolymers of acrylamide with hexyl acrylate, propyl acrylate or dodecyl acrylate are useful.

Preferably the solvent is selected from dimethyl sulfoxide, dimethylformamide, dimethylacetamide, formamide, formic acid, acetic acid, 2,2,2-trichloro ethanol, and mixtures thereof.

Preferably the nonsolvent is selected from water, alcohols having one to four carbon atoms, ammonia, ethylacetate, acetone, ethylenediamine, and mixtures thereof. The nonsolvent may be either liquid or gaseous.

The various methods of causing the nonsolvent to diffuse into the liquid layer of the resin solution will be exemplified with reference to a support having the form of a tube but will not be limited thereto. A liquid nonsolvent may be brought into contact with the liquid layer of resin solution from one or both sides thereof, for example by dipping the end of the tube at which the layer of resin solution is positioned into a liquid nonsolvent Additionally or alternatively, nonsolvent may be introduced from the distant end of the tube. If a gaseous nonsolvent is to be used, the arrangement of support with layer of resin solution is positioned within an atmosphere which is saturated or nearly saturated with the vapors of the nonsolvent. Precipitation may also be accomplished in two successive steps by firstly applying gaseous nonsolvent and, after partial solidification, subsequently applying liquid nonsolvent.

Plane upper and lower surfaces of the microporous element are obtained when the final concentration of nonsolvent in the resin solution during precipitation is raised to about 50% by weight. A plane upper surface allows for a more uniform filtration performance of the filter element. A plane lower surface provides even contact with, for example, blotting membranes onto which an adsorbed material is to be transferred.

Typical combinations of resin/solvent/nonsolvent are, for example, one of poly(vinylalcohol-co-ethylene), nitrocellulose, cellulose propionate, or polyvinylacetate as resin, dimethyl sulfoxide as solvent and water as nonsolvent; or polyamides (like Nylon 6,6) as resin, 2,2,2-trichloro ethanol as solvent and acetone as nonsolvent.

Without intending to be bound to theory it is believed that in generating the microporous element according to this first embodiment of the present invention the following mechanisms are involved:

When the nonsolvent diffuses into the layer of resin solution, the solubility of the resin is gradually decreased. As the limit of solubility is reached the resin begins to precipitate from the solution at individual points. The precipitation of the resin proceeds at the points of initial precipitation. Ultimately, the solvent/nonsolvent is enclosed in large interconnecting enclaves in a solid matrix of resin. The interconnecting enclaves form the liquid-permeable channels of the final microporous element. If a synthetic resin is used which comprises both hydrophilic and hydrophobic segments, the hydrophobic segments will be forced towards each other and brought into contact with each other as the concentration of nonsolvent in the resin solution increases. There will be interactions between the hydrophobic segments of neighboring molecule chains, which result in the formation of a crystalline hydrophobic backbone of the precipitated resin. The hydrophilic segments will be oriented towards the enclaves filled with solvent/nonsolvent. Accordingly, a microporous element is obtained where the liquid-permeable channels are predominantly hydrophilic. This provides the benefit of biocompatibility. The term "biocompatibility" means that the three-dimensional structure of biopolymers, for example proteins, is maintained. The interphase forces are less destructive when the polymer surface is rich in hydroxyl, amide or ether groups.

In order to modify the adsorptive properties of the microporous element, the solution of the synthetic resin further comprises solid microparticles. The microparticles may be composed of silicon dioxide, silica gel, aluminum oxide, titan dioxide, zirconium oxide, glass, carbon or graphite. Also, the microparticles can be composed of inorganic material, such as calcium phosphate, zinc polyphosphate or the like. Another type of granular microparticles consists of an inorganic core such as microporous silica gel with a microlayer of organic polymer. The pores and the surface of the grain may be modified in a way, that macromolecules are restricted from penetrating into the pores ("restricted access material"). Also, the microparticles may consist of organic material such as a powder of cured resin, or highly crosslinked polysaccharides, as are available under the Superdex tradename, however care has to be taken in selecting an organic material in that it must not be soluble in the solvent used. The microparticles can be non-porous or porous, but preferably are porous with a preferred pore size in the range of 1 nm to 500 nm. Generally, the microparticles have a size from 5 nm to 500 µm, in particular from 0.5 µm to 30 µm, however porous microparticles preferably have a size of 1 µm or more, whereas non-porous microparticles preferably have a size of 1 µm or less. The microparticles can be pretreated, for instance derivatized, such that the adsorbent properties thereof meet specific requirements. Any kind of commercially available adsorbent particles as used for solid phase extraction or chromatography, such as affinity chromatography with proteins, antibodies, peptides, carbohydrates, nucleic acids, or for ion exchange chromatography, immuno chromatography, hydrophobic interaction chromatography, chelating chromatography and reversed phase chromatography are useful. Materials suited for high performance liquid chromatography are especially useful. For example proteins, such as specific antibodies, lectins, avidin, receptor-proteins, enzymes, synthetic peptides, nucleic acids or oligonucleotides may be attached to the microparticles, either covalently or via linkers. The adsorbent particles have a granular shape, for example spherical and/or with irregular surfaces, but not necessarily fibrillar.

In the final microparticle-containing filter element, the outer or inner surfaces of the enclosed microparticles are accessible to an applied liquid sample, and adsorption/immobilization of analytes contained in the liquid sample can take place.

Furthermore, the method of the present invention for producing a filter element by generating a microporous element may comprise the steps of providing an aqueous solution of a hydrocolloid, which comprises microparticles slurried therein; applying the solution to at least one microporous retainer; causing the hydrocolloid solution to solidify; and optionally, one or both of desiccating and crosslinking the solidified hydrocolloid solution.

Preferably, the hydrocolloid is selected from low melting agarose, starch, polyvinyl alcohol, and mixtures thereof. The aqueous solution of the hydrocolloid contains preferably 1 to 10% by weight, in particular 2 to 5% by weight of the solution, of the hydrocolloid. When polyvinyl alcohol is used as the hydrocolloid, the addition of up to 0,2% by weight of the solution, of sodium tetraborate or of up to 50% by weight of the solution, of dimethyl sulfoxide is sometimes advantageous.

These hydrocolloids are poorly soluble in cold water, however disperse or dissolve upon heating. Preferably, a hot hydrocolloid solution is applied to the aperture of the carrier. Upon cooling, the hydrocolloid solution solidifies.

In one alternative, the solidified hydrocolloid solution is subsequently desiccated. Desiccation can be accelerated by heating the arrangement to a temperature of about 40°C. Alternatively, in particular when using heat sensitive material, desiccation can be achieved by placing the arrangement in a closed chamber over a desiccating agent such as phosphorus pentoxide. The final moisture content preferably is less than 1 mbar water vapor partial pressure.

Upon desiccation, the solidified layer of hydrocolloid solution shrinks. In absence of the microparticles mentioned above, the solidified layer of hydrocolloid solution would shrink away with the effect that no useful filter element would be obtained. According to the invention, microparticles are provided in the aqueous solution of hydrocolloid which act as pore-forming agent during desiccation. Accordingly, a plurality of microscopic cracks between the microparticles are formed upon desiccation. Also, the microparticles act so as to control or modify the adsorptive properties of the layer thus obtained. The microscopic cracks act as the liquid-permeable channels of the final microporous element. A proportion of 5 to 50%, calculated by weight of hydrocolloid solution, of microparticles will generally be useful.

The obtained layer of solidified hydrocolloid can be subjected to crosslinking instead of or after desiccation. For this purpose the microporous element is treated with crosslinking agents, for instance boric acid, sodium tetraborate, phosphorus oxide chloride, epichlorhydrin or bisoxiranes, such as 1,4-butanediol diglycidyl ether. Polyvinylalcohol can be crosslinked with sodium tetraborate by applying alkaline pH for gelation. Both desiccation and crosslinking have the effect of increasing the mechanical stability and solvent-resistance of the final microporous element.

In a preferred method, an aqueous hydrocolloid solution, in particular an aqueous solution of low melting agarose, which comprises solid microparticles slurried therein is applied to a microporous retainer, then a channel-sparing nonsolvent is permeated through the liquid layer while retaining the layer by means of a retaining fool as explained in detail below, then the retaining tool is removed and the hydrocolloid solution is caused to solidity. Finally, the solidified hydrocolloid layer is preferably subjected to crosslinking.

Useful microparticles are those discussed above in connection with the first embodiment of the invention. Additionally, microparticles coated with dextran, such as dextran-coated charcoal, dextran-coated poly(styrene-divinyl benzene) or biological structures absorbed to a porous support, such as ribosomes, nucleosomes, chromosomes, synaptosomes, phages, plasmids, all preadsorbed to porous or non-porous supporting beads, are to be mentioned. The microparticles preferably have a size from 0.5 µm to 500 µm.

In addition, the method of the present invention for producing a filter element by generating a microporous element can comprise the steps of providing a solution of a monomer or a mixture of monomers in a solvent, optionally comprising crosslinking monomers; applying the solution to at least one microporous retainer; and causing the monomer(s) to polymerize.

Preferably, the monomers are ethylenically unsaturated monomers such as vinylacetate or other vinylesters, acrylic acid and its derivatives. Preferred acrylic acid derivatives include acrylic acid amides, such as acrylamide, N,N-dimethyl acrylamide, acrylic acid diamine monoamide; acrylic esters, such as butyl acrylate, dodecyl acrylate, octadecyl acrylate, vinyl acrylate, 2,3-epoxypropyl acrylate, diethylaminoethyl acrylate, 2-dimethylaminoethyl acrylate, and 3-sulfopropyl acrylate.

Crosslinking monomers are monomers having two or more sites of ethylenical unsaturation. A preferred crosslinking monomer is N,N'-methylenebis(acrylamide). The presence of crosslinking monomers increases the mechanical stability and solvent-resistance of the final microporous element.

As a solvent water, dimethyl sulfoxide, dimethylformamide, dimethylacetamide, formamide, formic acid, acetic acid, 2,2,2-trichloro ethanol, or mixtures thereof are useful, depending on the nature of the monomer(s) used.

In a preferred method, an aqueous solution of acrylic acid or its derivatives, preferably together with crosslinking monomers, which comprises solid microparticles slurried therein is applied to a microporous retainer, then a channel-sparing nonsolvent is permeated through the liquid layer while retaining the layer by means of a retaining tool as explained in detail below, then the retaining tool is removed and the acrylic acid (derivatives) caused to polymerize.

A proportion of 1 to 10% by weight of crosslinking monomer(s), for example N,N'-methylenebis(acrylamide), calculated on the total monomer, is generally useful.

Also a mixture of hydrophilic and hydrophobic monomers is useful. In this case, there will be interactions between the polymerized units of the hydrophobic monomers of the growing molecule chains, which result in the formation of a crystalline hydrophobic backbone of the polymer formed. The units of the hydrophilic monomers will be orientated towards the enclaves filled with the solvent. Accordingly, a microporous element is obtained where the liquid-permeable channels are predominantly hydrophilic.

Sometimes the monomer or mixture of monomers is soluble in the solvent, whereas the growing polymer becomes increasingly insoluble in the selected solvent and finally precipitates from the solution. A mixture of solvents may be useful in some instances. A nonsolvent can be caused to diffuse into the layer of polymer solution after polymerization, in order to precipitate the polymer formed or to complete precipitation of the polymer formed. Also, a porogenic liquid, such as n-dodecanol or polypropylene oxides, can be present during polymerization. The polymerization may also result in a polymer gel swelled with the solvent used.

Polymerization of the ethylenically unsaturated monomers is generally effected under the influence of free radicals. Free radicals are generated from the usual thermally decomposable initiators or a combination of free radical initiator and reducing agent. Usually, the initiator is added to the monomer solution. The concentration of the initiator is adjusted to provide sufficient pot life for application of the monomer solution to the microporous retainer. A combination of N,N'-tetramethyl ethylene diamine and a persulfate is especially preferred as initiator. In the alternative, an aqueous solution of initiator or initiator/reducing agent is used which is in contact by one or both sides of the liquid layer of monomer solution. Also photoinitiators such as riboflavin are useful for initiating the polymerization.

Instead of ethylenically unsaturated monomers, a monomer or mixture of monomers can be used which are capable of undergoing polyaddition or polycondensation. Among useful monomers are a combination of diamines with polyepoxides, such as a combination of ethylenediamine with 1,4-butanediol diglycidylether. Further examples include polypropylene oxide diamine and 1,4-butanediol, each with 1.4-butanediol diglycidyl ether.

This embodiment involves the benefit of a lower viscosity of the monomer solution compared to a solution of a polymer of the same monomers at a corresponding concentration. The lower viscosity facilitates application of the solution to the microporous retainer.

In order to modify the adsorptive properties of the microporous element, the monomer solution may further comprise solid microparticles. Microparticles that are useful, have been discussed above.

Where microparticles are used, it is sometimes advantageous to permeate the microparticle-containing liquid layer with a channel-sparing non-solvent in order to displace excessive hydrocolloid solution, resin solution or monomer solution, respectively. The channel-sparing nonsolvent must be non-miscible with the solvents used. Permeation can be effected by pressing or drawing channel-sparing nonsolvent through the microparticle-containing layer whilst retaining the layer by means of a retaining tool consisting of a microporous filter. The hydrocolloid solution, resin solution or the monomer solution, respectively, is displaced from the larger interstices between the microparticles and accumulates at the points of contact of the microparticles. The channel-sparing nonsolvent keeps the interstices free, thus producing channels. The retaining tool is removed before or after solidification of the hydrocolloid or polymerization of the monomer(s) or precipitation of the resin. Upon solidification/polymerization/precipitation, the microparticles are linked one to another at their points of contact. The channel-sparing nonsolvent is removed by washing with a suitable liquid. As channel-sparing nonsolvent, silicon oil is preferred.

Also possible are combinations of two or more of the embodiments discussed above. For example, a microparticle-containing layer could be prepared according to one embodiment and subsequently be impregnated with a resin solution, in which resin is precipitated according to one other embodiment.

In this context, the various methods according to the embodiments discussed above may also comprise the step of arranging at least one microporous membrane at the microporous retainer, wherein the microporous membrane is preferably formed of (regenerated) cellulose, polyamide, polyester, polypropylene (PP) or polytetrafluorethylene (PTFE).

In the various embodiments of the invention, the handling of very small liquid volumes is involved. Undesired evaporation of solvents before solidification can be avoided when all operations are performed in closed systems with solvent-saturated atmosphere. Preferably the temperature is precisely controlled.

The invention further relates to a filter element as defined in the annexed claims which is obtainable by the various embodiments discussed above and which comprises at least one microporous element including at least one microporous retainer and a spongy-form-polymer embedding microparticles and being linked to the at least one microporous retainer.

According to a preferred embodiment of the present invention, the microporous retainer, preferably comprising solid particles connected with each other and preferably being in the form of a disc, grid, large-pored membrane, membrane with supporting fabric, membrane with woven or unwoven characteristics, net, plate, rod and/or truncated cone (when being in the form of a membrane, the microporous retainer may comprise microparticles connected with each other), is formed of polyethylene (PE), polypropylene (PP), propylene/ethylene copolymer, polyvinyl acetate, polyamide, polystyrene, polyethylene terephthalate (PET), polyether etherketon (PEEK), polycarbonate, poly(vinyl alcohol-co-ethylene), polyester, polyamide, glass, ceramics, quartz, silicon, silicon nitride, or mixtures thereof, stainless steel, or composite materials thereof with fibers or frames of glass, silicon dioxide, carbon or ceramics.

According to the present invention, the polymer is attached to at least one part of the outer surface of the microporous retainer. Additionally or alternatively, the microporous retainer can contain in its pores the polymer in such a manner that the pores have residual free spaces forming channels allowing the flow of a fluid through the filter element. In this case, the average diameter of the microparticles is preferably less than 50% of the average diameter of the pores.

According to a particularly inventive embodiment of the present invention, at least one microporous membrane is arranged at the microporous retainer, the microporous membrane being preferably formed of (regenerated) cellulose, polyamide, polyester, polypropylene (PP) or PTFE.

The invention also pertains to an embodiment according to which the polymer comprises a resin. This resin can be selected from the group consisting of polyvinyl esters, partially deacylated polyvinyl esters, cellulose derivatives, polyamides, and mixtures thereof; or from the group consisting of poly(vinyl alcohol-co-ethylene), ethylene acrylic acid copolymer, ethylene acrylic ester copolymer, acrylamide vinylacetate copolymer, copolymer of acrylic acid diamine monoamide with vinylacetate, poly(vinyl alcohol-co-styrane), acrylamide acrylic ester copolymer, and mixtures thereof.

Alternatively, the polymer can comprise a solidified hydrocolloid solution, optionally desiccated or crosslinked, wherein the hydrocolloid is preferably selected from the group consisting of low melting agarose, starch, polyvinyl alcohol, and mixtures thereof.

Alternatively, the polymer can comprise the polymerization product of a monomer selected from the group consisting of vinylesters, acrylic acid and its derivatives; or the polymerization product of a diamine and a diepoxide.

According to the present invention, the microporous element is arranged in a support member, which may have the form of a tube. In this context, at least one section of the tube may be of conical form, having a smaller and a larger cross-sectional end, and the microporous element may be located at or near to the smaller cross-sectional end.

According to an advantageous embodiment of the present invention, the outer and the inner surfaces of the microporous retainer are coated with a hydrophilic coating.

The inner wall of the tube is coated with a hydrophilic coating, wherein it may be expedient to keep the edge of the tube next to the microporous element free of hydrophilic coating.

According to various particularly inventive embodiments of the present invention, the microporous element can be in the form of a
- disc,
- grid,
- membrane with supporting fabric,
- membrane with woven or unwoven characteristics.
- net,
- plate,
- rod, or
- truncated cone.

The invention finally relates to a multiple channel filter element, comprising a plurality of filter elements which are obtainable by the various embodiments discussed above.

In the various embodiments of the invention, the handling of very small liquid volumes is involved. Undesired evaporation of solvents before solidification can be avoided when all operations are performed in closed systems with solvent-saturated atmosphere. Preferably the temperature is precisely controlled.

The invention further relates to the filter elements which are obtainable by the various embodiments discussed above. The filter elements according to the invention can be applied for most versions of analytical or micro preparative liquid chromatography such as affinity chromatography, immuno chromatography, ion exchange chromatography, reverse phase chromatography, hydrophobic interaction chromatography, adsorption chromatography at silica gels as well as for binding studies enabling also the isolation of multi component binding complexes.

The filter elements may be especially useful in biotechnology, in molecular biology and in medical biochemical diagnostics, allowing low-cost screening of hundreds of samples in parallel.

The following advantages were achieved: The method prevents the dislocation of microparticles during processing of a liquid and also during transportation, improved or simplified by applying selected suitable techniques as described above. In addition to that, the method opens the way for far going miniaturization, avoids unspecific loss of biopolymer by presenting biocompatible surfaces, and saves cost by using expensive microparticle material in very small amounts. Transfer of separated substances from the filter to blotting membranes is possible without having problems with dead volumes. Production at low cost allows the filter to be used only once, avoiding the risk of contamination. The possibility of using microparticles with known or standardized adsorptive properties allows for the manufacture of filter elements with predictable adsorption characteristics and facilitates quality control.

These and other embodiments are disclosed or are obvious from and encompassed by the description and examples of the present invention. For example, further literature concerning any one of the methods, uses and compounds to be employed in accordance with the present invention may be retrieved from public libraries, using for example electronic devices. For example the public database "Medline" may be utilized which is available on Internet, e.g. under http://www.ncbi.nlm.nih.gov/ PubMed/medline.html. Further databases and addresses are known to the person skilled in the art and can be obtained using, e.g., http://www.lycos.com. An overview of patent information in biotechnology and a survey of relevant sources of patent information useful for retrospective searching and for current awareness is given in Berks, TIBTECH 12 (1994), 352-364.

The present invention will be described in more detail below with reference to the exemplary embodiments which are schematically illustrated in the following drawings, in which:
- Fig. 1: shows a filter element for reference purposes;
- Fig. 2: illustrates the mode of operation of the channel-sparing nonsolvent.
- Fig. 3: shows a filter element for reference purposes;
- Fig. 4: shows a filter element for reference purposes;
- Fig. 5: shows a filter element as it can be contained in the filter device in accordance with the invention;
- Fig. 6: shows a filter element for reference purposes

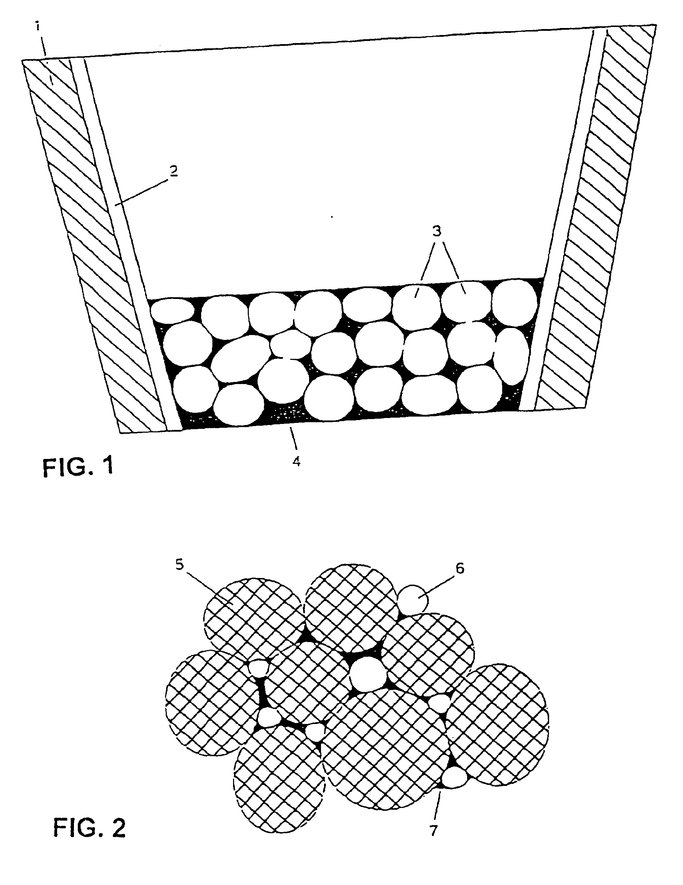

Fig. 1 shows a filter element obtained according to an embodiment of the invention. The filter element comprises a moisture-impervious support (1) having a hydrophilic coating (2) at the inner wall thereof. The filter element further comprises microparticles (3) in a matrix (4) of precipitated resin, solidified hydrocolloid or polymerized monomer.

Fig. 2 illustrates the mode of operation of the channel-sparing nonsolvent. The channel-sparing nonsolvent (6), shown in cross-section, keeps the larger interstices between the microparticles (5) free. The solution of resin, hydrocolloid or monomer (7) accumulates at the points of contact of the microparticles.

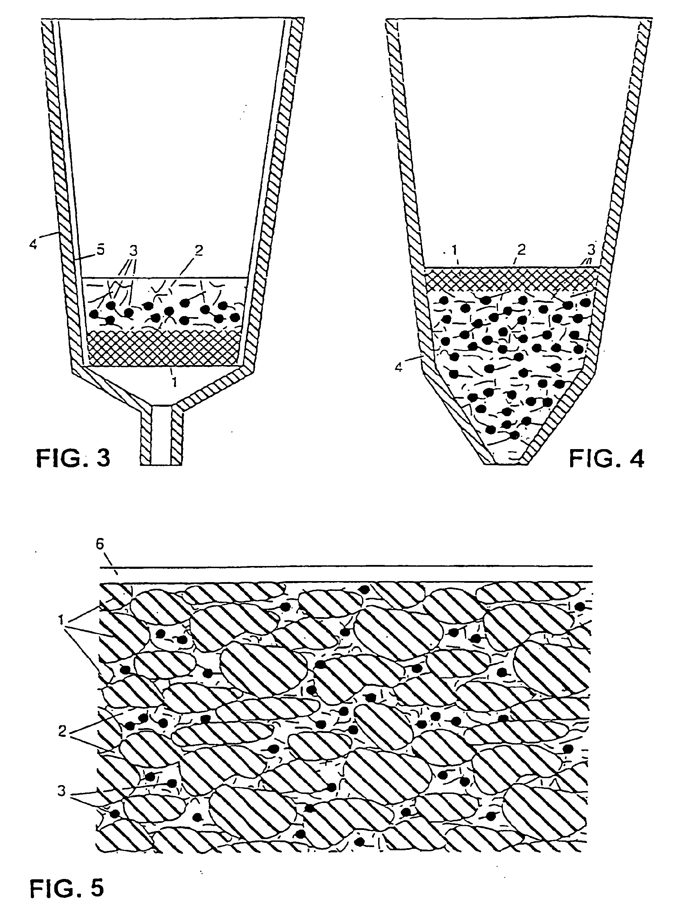

Fig. 3 shows a filter for reference purposes . The filter element comprises a microporous element including a microporous retainer 1 and a spongy-form-polymer 2 embedding microparticles 3 and being linked to the microporous retainer 1. In this context, Fig. 3 shows that the polymer 2 is attached to the top surface of the microporous retainer 1.

Though it cannot be explicitly taken from Fig. 3, it should be mentioned that the polymer 2 advantageously comprises a resin selected from the group consisting of polyvinyl esters, partially deacylated polyvinyl esters, cellulose derivatives, polyamides, polystyrene, poly(methyl methacrylate) and mixtures thereof. The resin may also be selected from the group consisting of poly(vinyl alcohol-co-ethylene), ethylene acrylic acid copolymer, ethylene acrylic ester copolymer, acrylamide vinylacetate copolymer, copolymer of acrylic acid diamine monoamide with vinylacetate, poly(vinyl alcohol-co-styrene), poly(styrene-co-maleic acid) and glycerol ester derivatives thereof, acrylamide acrylic ester copolymer, and mixtures thereof. Alternatively, the polymer 2 comprises a solidified hydrocolloid solution, optionally desiccated or crosslinked, wherein the hydrocolloid can be selected from the group consisting of low melting agarose, starch, polyvinyl alcohol, and mixtures thereof. Finally, it should not be overseen that the polymer 2 can also comprise the polymerization product of a monomer selected from the group consisting of vinylesters, acrylic acid and its derivatives; or the polymerization product of a diamine and a diepoxide.

The microporous element, as shown in Fig. 3, can be generated in situ from a liquid precursor. The liquid precursor readily takes a shape that matches the shape of the inner surface of a moisture-impervious support member 4 as well as the shape of the microporous retainer 1. Any imperfections like burrs etc. of the aperture of the moisture-impervious support member 4 are hereby compensated for. Upon solidification, a microporous element is obtained, which snugly fits into the aperture of the support member 4 and has complete circumferential contact to the walls thereof.

Preferably, the support member 4 is formed of a plastic such as polypropylene (PP), polyethylene (PE), propylene/ethylene copolymer, polyvinyl acetate, polyamide, polystyrene, polyethylene terephthalate (PET), polyether etherketon (PEEK), polycarbonate, polyethylene vinylacetate, poly(vinyl alcohol-co-ethylene), polyester, polyamide, glass, ceramics, quartz, silicon nitride, or mixtures thereof. Also included are composite materials of plastic with fibers or frames of glass, silicon dioxide, carbon or ceramics.

As can be taken from Fig. 3, the support member 4 has the form of a tube, preferably with circular cross-section, and the microporous element is generated at or near to one edge of the tube. In order to facilitate sample application and for accommodation of greater sample volumes, preferably at least a section of the tube is of conical form, having a smaller and a larger cross-sectional end, with the microporous element generated at or near to the smaller cross-sectional end. For example, the support member 4 is a pipette tip such as commonly used with Eppendorf pipettes. In order to prevent dislocation, such as slipping, of the microporous element formed, the tube may have a structured inner surface, like a surface with rings or grooves.

It is also envisaged to arrange a plurality of support members 4, for example up to several hundreds, in parallel alignment to form a multiple channel filter element. The multiple channel filter element will allow a biological sample to be tested simultaneously against hundreds of reagents. Alternatively, the support member 4 can comprise a plurality of apertures, for instance in the form of parallel bores or tapered holes. When the multiple channel element is to be evaluated optically, it is convenient to include an opacifying agent such as carbon black into the support member material to prevent interference from neighboring channels.

There are several possibilities of applying the liquid phase to the aperture of the support member 4. The various methods will be exemplified with reference to a tubular support member 4 but will not be limited thereto. As the liquid phase in general is a solution the terms "liquid phase" and "solution" will be used interchangeably unless otherwise required by the context. Conveniently, application of the solution to the aperture is accomplished by capillary action. The support member 4, for example a tube, is dipped into the solution and raised again. Due to the surface tension of the solution, a liquid layer will remain in the aperture over the cross-section of the aperture. If, for example, the viscosity of the solution is too high different methods for applying the solution to the aperture may be adopted. The ascending force of the solution may be enhanced by temporarily sealing the distant end of the tube, slightly heating the tube, then dipping the tube with its free end into the solution, and allowing the tube to cool to ambient temperature, whereby the solution is drawn into the tube by the volume contraction of the enclosed air. Alternatively the solution can be introduced from the distant end of the tube and may be brought into its final position by centrifugation. Preferably, the end at or near to which the microporous element is to be formed is sealed with a cap or by pressing against an elastic plate. The cap or the elastic plate preferably has microgrooves or micropores for allowing the enclosed air to escape. Then the arrangement is subjected to centrifugation during which the solution migrates to the end of the tube where it is retained at least partially by the cap or elastic plate. The cap or the elastic plate may be removed before or after solidification, in particular before solidification of the solution or of a part of the solution.

The practitioner often faces the problem that aqueous samples that are introduced in containers made of hydrophobic material tend to adhere to the wall in drops rather than flowing down and collecting at the bottom. In order to avoid this phenomena, the inner wall of a tube which acts as support member 4 for a filter element according to the invention, may be coated with a hydrophilic coating 5. The hydrophilic coating 5 will prevent aqueous samples from adhering to the wall of the support member 4. Also, there is no adsorptive loss of biopolymers due to adsorption to the wall of the support member 4. If the inner wall of the tube is coated with the hydrophilic coating 5, the edge of the tube next to the microporous element is preferably kept free of hydrophilic coating 5. This will prevent sample liquids which exit from the edge of the tube next to the microporous element from creeping to adjacent filter elements, especially in the embodiment of the present invention where a plurality of filter elements is arranged to form a multiple channel filter element.

The hydrophilic coating 5 is conveniently prepared by applying a solution of one or more polyvinyl esters in an organic solvent to the inner wall of the tube, allowing the organic solvent to evaporate, and partially hydrolyzing the resulting layer of polyvinyl ester at the surface thereof. Suitable polyvinyl esters include polyvinyl acetate (a MW of about 500000 is generally suitable), polyvinyl propionate and polyvinyl stearate.

Partial hydrolysis of the layer of polyvinyl ester is performed by contacting the layer of polyvinyl ester with an alkaline aqueous solution, such as sodium hydroxide. The edge of the tube next to the microporous element can be kept free of hydrophilic coating 5 by applying the solution of polyvinyl ester only to a part of the inner wall of the tube, for example by partially immersing the tube into the solution of polyvinyl ester. After hydrolysis, the microporous element can be generated at or near to the edge of the tube, that has not been brought into contact with the polyvinyl ester solution. Alternatively, the entire inner wall of the tube can be coated with polyvinyl ester, but only part thereof is hydrolyzed.

Alternatively, the hydrophilic coating 5 can be generated by using a high molecular weight polypropylene glycol, for example having a molecular weight of 4000 or higher. Such polypropylene glycols show moderate to good solubility in cold water, however poor solubility in warm water. Accordingly, a cold aqueous solution of polypropylene glycol, for example at 0°C to 4°C, might be introduced into the tube and subsequently the temperature is raised, for instance to about 20°C. The polypropylene glycol coming out of the solution shows a high affinity to the inner wall of the tube and deposits thereon as a thin layer. Excess polypropylene glycol solution is then removed. Additional chemical crosslinking may be advantageous in some cases.

Fig. 4 shows a filter element for reference purposes . The filter element comprises a microporous element including a microporous retainer 1 and a spongy-form-polymer 2 embedding microparticles 3 and linked to the microporous retainer 1. In this context, Fig. 4 shows that the polymer 2 is attached to the bottom surface of the microporous retainer 1.

It can be taken from Fig. 4 that the microporous element is arranged in a moisture-impervious support member 4 having the form of a tube. One section of the tube is of conical form, having a smaller and a larger cross-sectional end, and the microporous element is located at or near to the smaller cross-sectional end.

Fig. 5 shows a filter element as it can be contained in the filter device in accordance with the present invention. It is illustrated in Fig. 5 that the microporous retainer 1 comprises solid particles connected with each other.

Though it cannot be explicitly taken from Fig. 5, it should be mentioned that the microporous retainer 1 is advantageously formed of polyethylene (PE), polypropylene (PP), propylene/ethylene copolymer, polyvinyl acetate, polyamide, polystyrene, polyethylene terephthalate (PET), polyether etherketon (PEEK), polycarbonate, poly(vinyl alcohol-co-ethylene), polyester, polyamide, glass, ceramics, quartz, silicon, silicon nitride, or mixtures thereof, stainless steel, or composite materials thereof with fibers or frames of glass, silicon dioxide, carbon or ceramics. In this context, the microporous retainer 1 can be embodied in the form of a disc, grid, large-pored membrane, membrane with supporting fabric, membrane with woven or unwoven characteristics, net, plate, rod and/or truncated cone. When being in the form of a membrane, the microporous retainer 1 may comprise microparticles connected with each other.

In this context, it should be mentioned that it is possible to produce the microporous element in a (microporous) mold and to process and use it, optionally after adapting it to a suitable size for instance by cutting, in the desired ways described above and below.

Fig. 5 shows that the microporous retainer 1 contains in its pores the polymer 2 in such a manner that the pores have residual free spaces forming channels allowing the flow of a fluid through the filter element. In this connection, the average diameter of the microparticles 3 is less than 50% of the average diameter of the pores.

A microporous membrane 6 is arranged at the top surface of the microporous retainer 1. Though it cannot be explicitly taken from Fig. 5, it should be mentioned that the microporous membrane 6 is advantageously formed of (regenerated) cellulose, polyamide, polyester, polypropylene (PP) or teflon.

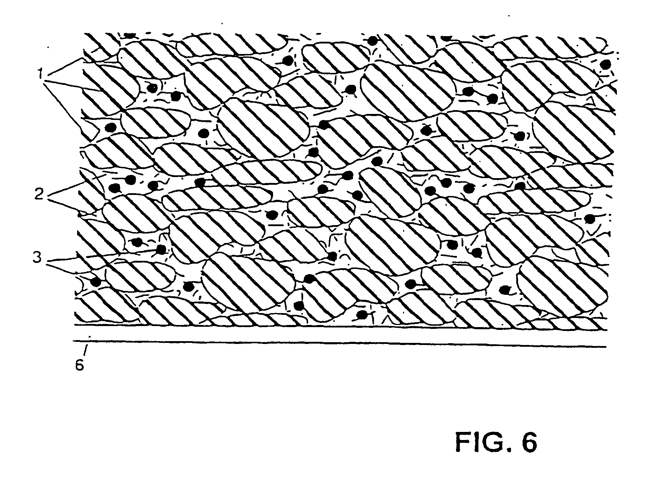

Fig. 6 shows a filter element for reference purposes. In Fig. 6, the microporous membrane 6 is arranged at the bottom surface of the microporous retainer 1.

The invention will now be further illustrated by the following examples.

Microfilters of example 1 - 4 are less resistant to organic solvents but more easy to prepare. Microfilters of example 5 and 6 are especially useful when labile macromolecules such as enzymes, antibodies or receptor proteins are bound to microparticles. The solidification occurs under biocompatible conditions with respect to temperature, acidity and tonicity. Microfilters of example 7 are especially useful for covalent immobilization.

In this context, microfilters of example 12 and 13 are especially useful when labile macromolecules such as enzymes, antibodies or receptor proteins are bound to microparticles. The solidification occurs under biocompatible conditions with respect to temperature, acidity and tonicity. Microfilters of example 14 are especially useful for covalent immobilization. Microfilters of example 15 are useful when organic solvents are applied.

### Example 1:

### Production of biocompatible surface of the impermeable element and production of microporous element by diffusion of nonsolvent.

A solution of 3% polyvinyl acetate (w/v) in acetone (MW 500,000, Cat. No. 38793-2; Aldrich, Steinheim G) was applied to the inner surface of a 100 µl-filtertip (Cat. No. 00 30 067.010; Eppendorf, Hamburg G) and was drained over blotting paper. After evaporating at ambient temperature and heating at 70°C overnight, the tip was filled with 1 ml of 1 N-NaOH in water, and a partial reaction was performed at 24°C for 30 min. Finally, the tip was washed and dried. In addition, a solution was prepared, by dissolving 1 g of poly(vinyl alcohol-co-ethylene) of 44 mol % ethylene content (Cat. No. 41, 410-7; Aldrich, Steinheim G) with 4 ml dimethyl sulfoxide at 100°C. 100 mg of reversed-phase material on silica gel (C₁₈. 30 nm pore, 5 µm bead; Vydac, Hesperia, CA, USA) was sonicated with the polymer solution. A volume of 30 µl of suspension was taken up at 40°C. After closing the smaller aperture of the filtertip, water was introduced into the tip as a vapor. One hour later, 50 µl of water was applied directly over the solidifying liquid phase to obtain further diffusional precipitation.

### Example 2:

### Production by precipitation of semisynthetic polymer with inclusions of a mixture of different types of microparticles.

A mixture was prepared from three different types of porous microparticles: 100 mg of anion exchanger based on silica gel (Adsorbex-SAX, Cat. No. 19845; Merck, Darmstadt G) 100 mg of cation exchanger (Adsorbex-SCX, Cat. No. 19846) and 100 mg reversed-phase RP8 (Cat. No. 9362). After sonification with 1ml of dimethyl sulfoxide and centrifugation, the wet sediment was supplemented with 600 µl of 15% cellulose propionate (average MW 200,000; Cat. No. 18462-4; Aldrich, Steinheim, G) in dimethyl sulfoxide, prepared at 95°C. A modified 100 µl-filtertip (Cat. No. 00 30 067.010; Eppendorf, Hamburg G) with biocompatible surface modification was filled with 20 µl of liquid and layered with 30 µl of silicon oil and finally layered with 50 µl distilled water. Positive pressure was applied until the water phase passed finally the microfilter.

### Example 3:

### Production by crosslinking of reversible hydrogel in the presence of channel-sparing nonsolvent at 0°C.

A solution of 5% (w/v) poly(vinyl alcohol) (MW 124 000 - 186 000, 99% hydrolyzed; Cat. No. Aldrich, 36 306-5; Steinheim G) in water was prepared at 100°C. 4 ml of solution were mixed with 1 ml of 50 mM sodium tetraborate pH 4.7 and cooled to 0°C. Finally, 1 g of enzyme-containing SAX particles (Adsorbex-SAX, Merck, Darmstadt G) were added. 100 µl of this suspension were filled into a modified 1 ml-filtertip (Cat. No. 00 30 067.037; Eppendorf, Hamburg G) with a biocompatible surface. The tip was layered with 100 µl silicon oil. After applying positive pressure, migration of the silicon oil was achieved into the granular bed. In order to achieve crosslinking, a final layer of 50 mM sodium tetraborate pH 8.6 solution was forced through the microporous element.

### Example 4:

### Production by using a reversible hydrogel in the presence of a channel-sparing non-solvent.

1 g of DEAE-Si 300, 10 µm-size (Cat. No. 43536; Serva, Heidelberg G) was mixed with 5 ml of a 2% agarose solution at 40°C. The agarose (low melt preparative agarose Cat. No. 162-0017; Bio-Rad, Munich, G) had been dissolved at 90°C in 3% sucrose solution. Then, 100 µl of liquid phase was taken up into a modified 1 ml-filtertip (Cat. No. 00 30 067.037; Eppendorf, Hamburg G) with biocompatible surface coating, as described in example 8. After addition of an upper layer of 500 µl silicon oil at 40°C, positive pressure was applied until 400 µl had passed the microporous retainer. Solidification was achieved at 6°C. Finally the silicon oil was expelled by filtration of 500 µl sucrose solution.

### Example 5:

### Production by polycondensation in presence of channel-sparing nonsolvent.

100 mg of silica gel (Lichrosorb Si 100, 7 µm size; Cat. No. 9340; Merck, Darmstadt. G) were sonicated with 500 µl of monomer solution (by vol: 5 parts of 1,4 - butanediol diglycidyl ether (Cat. No. 22,089-2; Aldrich, Steinheim G), one part dimethyl sulfoxide and one part ethylenediamine). 35 µl of liquid phase were taken up into a modified 10 µl-filtertip (Cat. No. 00 30 067.002; Eppendorf, Hamburg G). After layering 70 µl of silicon oil onto the liquid-phase, positive pressure was applied (at least one bar) until 30 µl of silicon oil were flown through the filtertip. Solidification was achieved by curing in a closed system. Finally, the filter element was washed with distilled water and suitable buffer.

### Example 6:

### Production by polymerization in the presence of channel-sparing nonsolvent.

100 mg of silica gel type anion exchanger of HPLC quality (DEAE-Si 300, 10 µm; Cat. No. 43536; Serva, Heidelberg G) were sonicated with ice-cold 500 µl monomer solution (By weight: 26% acrylamide; 0,7% bis acrylamide; 170 mM Tris HCl pH 8,8; 0,05% tetramethyl ethylenediamine (Cat. No. 8133; Sigma, Deisenhofen) 0,08% sodium persulfate).

All further steps were done as described in example 14 except that the temperature was held between 0°C and 2°C as during the flushing step with silicon oil. Finally, solidification was achieved by curing at 45°C.

### Example 7:

### Production using hydrogel and microparticles with reformation of channels by means of drying.

1 ml of a 2% (w/v) solution of agarose (Bio-Rad, Munich G) was mixed and sonicated with 200 mg of microporous titan dioxide (YMC-Gel, TIAOS 20 NP; YMC Europe, Schermbeck G) at 40°C. At the same temperature, 50 µl of liquid was taken up into a filtertip that was provided with biocompatible surface coating (see example 1). Using low speed centrifugation (80 rounds per minute) in a swing-out-rotor, the pressure was adjusted in a way that flow was stopped when the microparticles were just beginning to be exposed. Solidification was achieved at 6°C. Drying was done at ambient temperature and finally over P₂O₅. at 1 mb.

### Example 8:

### Isolation of multimolecular complexes consisting of oligonucleotides and specific macromolecules, non covalently bound together.

A labeled oligonucleotide probe was incubated with nuclear extract, and 8 µl were filtered over a polyacrylamide - DEAE microfilter (example 6) which was washed with 40 µl buffer. The free oligonucleotide was retained and the complexed form was obtained in the eluate within some minutes.

## Claims

1. A method for producing a filter device comprised of a support in the form of a tube having an aperture and a microporous element as a filter and/or adsorption material, **characterized in that** the microporous element is generated within the support over the cross-section of the aperture by a process comprising the steps of
a) applying a substance in a liquid phase which is a solution or suspension of a polymer or a solution or suspension of one or more monomers to a microporous retainer present within the support;
b) causing solidification in spongy form of at least part of the substance; and
c) coating the inner wall of the tube with a hydrophilic coating;
wherein the microporous retainer contains in its pores said polymer in such a manner that the pores have residual free spaces forming channels allowing the flow of a fluid through the filter element.

2. The method according to claim 1, wherein the liquid phase is a solution or suspension of a polymer in a solvent and the solidification in spongy form is caused by the action of a non-solvent for the polymer.

3. The method according to claim 2, wherein the polymer is selected from the group consisting of polyvinyl esters, partially deacylated polyvinyl esters, cellulose derivatives, polyamides, polystyrene, poly(methyl methacrylate) and mixtures thereof.

4. The method according to claim 2 or 3, wherein the polymer comprises both hydrophilic and hydrophobic segments within its molecules.

5. The method according to claim 4, wherein the polymer is selected from the group consisting of poly(vinyl alcohol-co-ethylene), poly(vinyl alcohol-co-vinylacetate), ethylene acrylic acid copolymer, ethylene acrylic ester copolymer, ethylene acrylamide copolymer, acrylic acid vinylacetate copolymer, acrylamide vinylacetate copolymer, copolymer of acrylic acid diamine monoamide with vinylacetate, poly(vinyl alcohol-co-styrene), poly(styrene-co-maleic acid) and the glycerol ester derivative, acrylamide acrylic ester copolymer, and mixtures thereof.

6. The method according to anyone of claims 2 to 5, wherein the solvent is selected from the group consisting of dimethyl sulfoxide, dimethylformamide, dimethylacetamide, formamide, formic acid, acetic acid, 2,2,2-trichloro ethanol, toluene, tetrahydrofuran and mixtures thereof.

7. The method according to any one of claims 2 to 6, wherein the solvent is comprised of at least two volatile non-solvents.

8. The method according to claim 7, wherein said solvent is removable at ambient temperature or vacuum.

9. The method according to any one of claims 2 to 8, wherein the solidification is achieved by evaporating the solvent and/or non-solvent.

10. The method according to anyone of claims 2 to 9, wherein the nonsolvent is selected from the group consisting of water, alcohols having 1 to 4 carbon atoms, ammonia, ethylacetate, acetone, ethylene-diamine, and mixtures thereof.

11. The method according to claim 1, wherein the liquid phase is a hydrocolloid.

12. The method according to claim 11, wherein the hydrocolloid is selected from the group consisting of low melting agarose, starch, polyvinyl alcohol, and mixtures thereof.

13. The method according to claim 11 or 12, wherein the layer of hydrocolloid solution is subjected to crosslinking by sodium tetraborate.

14. The method according to any one of claims 11 to 13, wherein the solidified hydrocolloid is desiccated and/or crosslinked.

15. The method according to claim 1, wherein the liquid phase is a solution or suspension of one or more monomers and the solidification is caused by polymerizing said monomer.

16. The method according to claim 15, wherein the monomer(s) is (are) present in a solvent.

17. The method according to claim 15 or 16, wherein the monomer(s) comprise(s) one or more crosslinking monomers.

18. The method according to claim 17, wherein said monomers comprise a diamine and a polyepoxide.

19. The method according to any one of claims 15 to 18, wherein the monomer is selected from the group consisting of vinylesters, acrylic acid and its derivatives, and polymerization is effected under the influence of free radicals.

20. The method according to any of claims 2 to 18, wherein a nonsolvent, which is miscible with the solvent used, is allowed to mix with the substance in order to cause the precipitation of the polymer.

21. The method according to anyone of claims 1 to 19, wherein the substance is permeated with a nonsolvent which is non-miscible with solvents used.

22. The method according to claim 21, wherein nonsolvent is silicon oil, water or air.

23. The method according to any of claims 1 to 19, wherein the substance is permeated with reversible hydrogel or with liquids being insoluble in water at temperature above 20°.

24. The method according to claim 1, wherein the substance is thermoplastic polymer and the solidification is caused by sintering, e.g. by heating or the action of a solvent.

25. The method according to claim 24, wherein the polymer is a styrene-maleic acid copolymer or polyvinylacetate.

26. The method according to any of claims 1 to 25, wherein the substance further comprises solid microparticles, being porous or non-porous from 0.01 µm to 500 µm in size.

27. The method according to claim 26, wherein the substance and the microparticles are present as a suspension in a non-solvent of low viscosity.

28. The method according to claim 27, wherein said substance and said microparticles are solidified by evaporating from a very diluted solution in a poor solvent or, by sintering at moderate temperatures up to 130°C without polymer solution, using only partially molten polymer instead.

29. The method according to any one of claims 26 to 28, wherein said microparticles modify the adsorptive properties of the final microporous element.

30. The method according to any one of claims 26 to 29, wherein said microparticles contain an effector molecule capable of sequestering an ion, selectively binding to a solid support, binding to a preselected antigenic determinant or being a ligand.

31. The method according to claim 30, wherein said molecule comprises an enzyme or remotely detectable moiety.

32. The method according to claim 30 or 31, wherein said molecule comprises a sequence of amino acids, nucleic acids or analogs or derivatives thereof.

33. The method according to any one of claims 30 to 32, wherein said molecule capable of sequestering an ion is calmodulin, metallothionein, a fragment thereof, or an amino acid sequence rich in at least one of glutamic acid, aspartic acid, lysine and arginine.

34. The method according to any one of claims 30 to 33, wherein said effector molecule capable of binding to a preselected antigenic determinant is an antibody or fragment or a derivative thereof.

35. The method according to any one of claims 30 to 34, wherein said molecule capable of selective binding to a solid support is GST, His-tag, Lex-A.

36. The method according to any one of claims 30 to 35, wherein said ligand is Ni-NTA.

37. The method according to any of claims 1 to 34, wherein the applied substance is self-sustaining.

38. The method according to claim 37, wherein the support is moisture-impervious.

39. The method according to any of claims 1 to 37, wherein the support is formed of polypropylene (PP), polyethylene (PE), propylene/ethylene copolymer, polyvinyl acetate, polyamide, polystyrene, polyethylene terephthalate (PET), polyether etherketon (PEEK), polycarbonate, polyethylene vinylacetate, poly(vinyl alcohol-co-ethylene), polyester, polyamide, glass, ceramics, quartz, silicon nitride, or mixtures thereof, or composite materials thereof with fibers or frames of glass, silicon dioxide, carbon or ceramics.

40. The method according to any of claims 1 to 39, wherein the microporous element is generated at or near to one edge of the tube.

41. The method according to claim 40, wherein at least a section of the tube is of conical form, having a smaller and a larger cross-section end, and the microporous element is generated at or near to the smaller cross-section end.

42. The method according to claim 40 or 41, wherein the step of applying the substance to the aperture is accomplished by allowing a solution to ascend in the tube by capillary action.

43. The method according to claim 1, wherein the edge of the tube next to the microporous element is kept free of hydrophilic coating.

44. The method according to claim 1, wherein the hydrophilic coating is formed by applying a solution of one or more polyvinyl esters or polyol derivatives of poly(styrene-co-maleic-acid) in an organic solvent to the inner wall of the tube, allowing the organic solvent to evaporate.

45. The method according to any one of claims 1 to 44, wherein the diameter of the aperture of the support is from 0.02 mm to 4 mm.

46. The method according to claim 1, wherein the microporous retainer comprises solid particles connected with each other.

47. The method according to any one of claims 1 to 46, wherein the microporous retainer is formed of polypropylene (PP), propylene/ethylene copolymer, polyvinyl acetate, polyamide, polystyrene, polyethylene terephthalate (PET), polyether etherketon (PEEK), polycarbonate, poly(vinyl alcohol-co-ethylene), polyester, polyamide, glass, ceramics, quartz, silicon, silicon nitride, or mixtures thereof, stainless steel, or composite materials thereof with fibers or frames of glass, silicon dioxide, carbon or ceramics.

48. The method according to any one of claims 1 to 47, wherein the microporous retainer is in the form of a disc, grid, large-pore membrane, membrane with supporting fabric, membrane with woven or unwoven characteristics, net, plate, rod or truncated cone.

49. The method according to anyone of claims 1 to 48, further comprising the step of arranging at least one microporous membrane at the microporous retainer.

50. The method according to claim 49, wherein the microporous membrane is formed of (regenerated) cellulose, polyamide, polyester, polypropylene (PP) or polytetrafluorethylene (PTFE).

51. A filter device comprised of a support in the form of a tube having an aperture, a microporous element present within the support over the cross section of the aperture and obtainable in accordance with the process for generating a microporous element as defined in any of claims 1 to 50 as a filter and/or adsorption material, and a hydrophilic coating coating the inner wall of the tube obtainable according to the method of any one of claims 1 to 50.

52. The filter device according to claim 51 wherein the liquid phase is a solution or suspension of a polymer in a solvent and the solidification in spongy form is caused by the action of a non-solvent for the polymer and wherein the polymer is attached to at least one part of the outer surface of the microporous retainer.

53. A multiple channel filter element, comprising a plurality of filter devices according to any one of claims 51 to 52.

54. Use of a filter device of any one of claims 51 to 53 for micro filtration, solid-liquid separation, clearing of solutions, harvesting of pro- and eukaryotic cells, removal and purification of cellular fragments and debris, immobilization of fragments, viruses and plasmids, adsorption/immobilization of proteins, polypeptides, nucleic acids, oligonucleotides or as retainer for granular material.

55. Use of a filter device of any one of claims 51 to 53 for affinity chromatography, immuno chromatography, for binding studies, the isolation of multi component binding complexes, for the screening of samples, or for preventing the dislocation of microparticles.

56. The use of claim 54 or 55 for the preparation and/or detection of compounds comprising nucleic acids, oligonucleotides, polypeptides or polysaccharides, proteins, organic compounds, or derivatives or analogs thereof.

57. The use of claim 56, wherein said compound is derived from natural or non-natural sources.

## Patentansprüche

1. Ein Verfahren zur Herstellung einer Filtervorrichtung, umfassend einen Träger in Form einer Röhre, die eine Öffnung und ein mikroporiges Element als einen Filter und/oder adsorbierendes Material aufweist, **dadurch gekennzeichnet, dass** das mikroporige Element in dem Träger über den Querschnitt der Öffnung gebildet wird, durch ein Verfahren, das die Schritte
a) Aufbringen einer Substanz in einer Flüssigphase, welche eine Lösung oder Suspension eines Polymers oder eine Lösung oder Suspension eines oder mehrer Monomere ist, auf eine mikroporige Halterung, die innerhalb des Trägers vorliegt;
b) Verfestigen lassen in poröser Form von mindestens einem Teil der Substanz;
und
c) Beschichten der Innenwand der Röhre mit einer hydrophilen Beschichtung,
umfasst;
wobei die mikroporige Halterung in ihren Poren das Polymer so enthält, dass die Poren Restfreiräume aufweisen, die Kanäle formen, wodurch der Fluss eines Fluids durch das Filterelement ermöglicht wird.

2. Das Verfahren gemäß Anspruch 1, wobei die Flüssigphase eine Lösung oder Suspension eines Polymers in einem Lösungsmittel ist und die Verfestigung in poröser Form durch die Einwirkung eines Nicht-Lösungsmittels für das Polymer verursacht wird.

3. Das Verfahren gemäß Anspruch 2, wobei das Polymer ausgewählt ist aus der Gruppe bestehend aus Polyvinylestern, teilweise deacylierten Polyvinylestern, Cellulosederivaten, Polyamiden, Polystyrol, Poly(methylmethacrylaten) und Gemischen davon.

4. Das Verfahren gemäß Anspruch 2 oder 3, wobei das Polymer sowohl hydrophile als auch hydrophobe Abschnitte in seinen Molekülen umfasst.

5. Das Verfahren gemäß Anspruch 4, wobei das Polymer ausgewählt ist aus der Gruppe bestehend aus Poly(vinylalkohol-co-ethylen), Poly(vinylalkohol-co-vinylacetat), Ethylenacrylsäurecopolymer, Ethylenacrylestercopolymer, Ethylenacrylamidcopolymer, Acrylsäurevinylacetatcopolymer, Acrylamidvinylacetatcopolymer, Copolymer von Acrylsäurediaminmonoamid mit Vinylacetat, Poly(vinylalkohol-co-styrol), Poly(styrol-co-maleinsäure) und Glycerinesterderivate, Acrylamidacrylestercompolymer und Gemische davon.

6. Das Verfahren gemäß einem der Ansprüche 2 bis 5, wobei das Lösungsmittel ausgewählt ist aus der Gruppe bestehend aus Dimethylsulfoxid, Dimethylformamid, Dimethylacetamid, Formamid, Ameisensäure, Essigsäure, 2,2,2-Trichlorethanol, Toluol, Tetrahydrofuran und Gemischen davon.

7. Das Verfahren gemäß einem der Ansprüche 2 bis 6, wobei das Lösungsmittel mindestens zwei flüchtige Nicht-Lösungsmittel beinhaltet.

8. Das Verfahren gemäß Anspruch 7, wobei das Lösungsmittel bei Raumtemperatur oder unter Vakuum entfernbar ist.

9. Das Verfahren gemäß einem der Ansprüche 2 bis 8, wobei die Verfestigung durch Verdampfen des Lösungsmittels und/oder Nicht-Lösungsmittels erfolgt.

10. Das Verfahren gemäß einem der Ansprüche 2 bis 9, wobei das Nicht-Lösungsmittel ausgewählt ist aus der Gruppe bestehend aus Wasser, Alkoholen mit 1 bis 4 Kohlenstoffatomen, Ammoniak, Ethylacetat, Aceton, Ethylendiamin und Gemischen davon.

11. Das Verfahren gemäß Anspruch 1, wobei die Flüssigphase ein Hydrokolloid ist.

12. Das Verfahren gemäß Anspruch 11, wobei das Hydrokolloid ausgewählt ist aus der Gruppe bestehend aus niedrig schmelzender Agarose, Stärke, Polyvinylalkohol und Gemischen davon.

13. Das Verfahren gemäß Anspruch 11 oder 12, wobei die Schicht der Hydrokolloidlösung einer Vernetzung durch Natriumtetraborat unterzogen wird.

14. Das Verfahren gemäß einem der Ansprüche 11 bis 13, wobei das verfestigte Hydrokolloid getrocknet und/oder vernetzt wird.

15. Das Verfahren gemäß Anspruch 1, wobei die Flüssigphase eine Lösung oder eine Suspension aus einem oder mehreren Monomeren ist und die Verfestigung durch Polymerisieren dieses Monomers erfolgt.

16. Das Verfahren gemäß Anspruch 15, wobei das/die Monomer(e) in einem Lösungsmittel vorliegt/vorliegen.

17. Das Verfahren gemäß Anspruch 15 oder 16, wobei das/die Monomer(e) ein oder mehr vernetzende Monomere umfasst/umfassen.

18. Das Verfahren gemäß Anspruch 17, wobei die Monomere ein Diamin und ein Polyepoxid umfassen.

19. Das Verfahren gemäß einem der Ansprüche 15 bis 18, wobei das Monomer ausgewählt ist aus der Gruppe bestehend aus Vinylestern, Acrylsäure und deren Derivate, und die Polymerisation unter Einfluss von freien Radikalen erfolgt.

20. Das Verfahren gemäß einem der Ansprüche 2 bis 18, wobei ein Nicht-Lösungsmittel, welches mit dem verwendeten Lösungsmittel mischbar ist, mit den Substanzen gemischt wird, um die Fällung des Polymers zu verursachen.

21. Das Verfahren gemäß einem der Ansprüche 1 bis 19, wobei die Substanz mit einem Nicht-Lösungsmittel, welches nicht mischbar mit den verwendeten Lösungsmitteln ist, durchdrungen ist.

22. Das Verfahren gemäß Anspruch 21, wobei das Nicht-Lösungsmittel Silikonöl, Wasser oder Luft ist.

23. Das Verfahren gemäß einem der Ansprüche 1 bis 19, wobei die Substanz mit einem reversiblen Hydrogel oder mit Flüssigkeiten, die in Wasser bei Temperaturen über 20°C unlöslich sind, durchdrungen ist.

24. Das Verfahren gemäß Anspruch 1, wobei die Substanz ein thermoplastisches Polymer ist und die Verfestigung durch Sintern, z.B. durch Erwärmen oder die Einwirkung eines Lösungsmittels verursacht wird.

25. Das Verfahren gemäß Anspruch 24, wobei das Polymer ein Styrol-Maleinsäure-Copolymer oder Polyvinylacetat ist.

26. Das Verfahren gemäß einem der Ansprüche 1 bis 25, wobei die Substanz ferner feste Mikroteilchen, die porös oder nicht-porös sind, in einer Größe von 0,01 µm bis 500 µm umfasst.

27. Das Verfahren gemäß Anspruch 26, wobei die Substanz und die Mikroteilchen als eine Suspension in einem Nicht-Lösungsmittel mit niedriger Viskosität vorhanden sind.

28. Das Verfahren gemäß Anspruch 27, wobei die Substanz und die Mikroteilchen verfestigt werden durch Verdampfen aus einer sehr verdünnten Lösung in einem schlechten Lösungsmittel oder durch Sintern bei moderaten Temperaturen bis zu 130°C ohne Polymerlösung, dafür unter Verwendung von nur teilweise geschmolzenem Polymer.

29. Das Verfahren gemäß einem der Ansprüche 26 bis 28, wobei die Mikroteilchen die Adsorptionseigenschaften des resultierenden mikroporigen Elements modifizieren.

30. Das Verfahren gemäß einem der Ansprüche 26 bis 29, wobei die Mikroteilchen ein Effektormolekül enthalten, das fähig ist zum Sequestrieren eines Ions, selektiven Binden an ein festes Trägermaterial, Binden an einer vorausgewählten Antigendeterminante oder ein Ligand ist.

31. Das Verfahren gemäß Anspruch 30, wobei das Molekül ein Enzym oder eine aus der Ferne detektierbare Einheit umfasst.

32. Das Verfahren gemäß Anspruch 30 oder 31, wobei das Molekül eine Sequenz aus Aminosäuren, Nukleinsäuren oder Analoga oder Derivaten davon umfasst.

33. Das Verfahren gemäß einem der Ansprüche 30 bis 32, wobei das Molekül, das zum Sequestrieren eines Ions fähig ist, Calmodulin, Metallothionin, ein Fragment davon, oder eine Aminosäuresequenz ist, die reich an mindestens einem von Glutaminsäure, Asparaginsäure, Lysin oder Arginin ist.

34. Das Verfahren gemäß einem der Ansprüche 30 bis 33, wobei das Effektormolekül, das dazu fähig ist an einer vorausgewählten Antigendeterminante zu binden, ein Antikörper oder Fragment oder Derivat davon ist.

35. Das Verfahren gemäß einem der Ansprüche 30 bis 34, wobei das Molekül, das dazu fähig ist selektiv an ein festes Trägermaterial zu binden, GST, His-tag, Lex-A ist.

36. Das Verfahren gemäß einem der Ansprüche 30 bis 35, wobei der Ligand Ni-NTA ist.

37. Das Verfahren gemäß einem der Ansprüche 1 bis 34, wobei die aufgebrachte Substanz selbsttragend ist.

38. Das Verfahren gemäß Anspruch 37, wobei der Träger feuchtigkeitsundurchlässig ist.

39. Das Verfahren gemäß einem der Ansprüche 1 bis 37, wobei der Träger aus Polypropylen (PP), Polyethylen (PE), Propylen/Ethylen Copolymer, Polyvinylacetat, Polyamid, Polystyrol, Polyethylenterephthalat (PET), Polyetheretherketon (PEEK), Polycarbonat, Polyethylenvinylacetat, Poly(vinylalkohol-co-ethylen), Polyester, Polyamid, Glas, Keramik, Quarz, Siliciumnitrid, oder Gemischen davon, oder Kompositmaterialien davon mit Fasern oder Tragkörpern aus Glas, Siliciumdioxid, Kohlenstoff oder Keramik, gebildet ist.

40. Das Verfahren gemäß einem der Ansprüche 1 bis 39, wobei das mikroporige Element an oder in der Nähe zu einer Kante der Röhre gebildet wird.

41. Das Verfahren gemäß Anspruch 40, wobei mindestens ein Bereich der Röhre eine konische Form, mit einem kleineren und einem größeren Endquerschnitt, aufweist und das mikroporige Element am oder nahe dem kleineren Endquerschnitt gebildet wird.

42. Das Verfahren gemäß Anspruch 40 oder 41, wobei der Schritt des Aufbringens der Substanz auf die Öffnung durch Steigen lassen einer Lösung in die Röhre, durch Kapillarwirkung, erreicht wird.

43. Das Verfahren gemäß Anspruch 1, wobei die Kante der Röhre, welche dann dem mikroporigen Element am nächsten liegt, frei von hydrophiler Beschichtung gehalten wird.

44. Das Verfahren gemäß Anspruch 1, wobei die hydrophile Beschichtung durch Auftragen einer Lösung von einem oder mehren Polyvinylestern oder Polyolderivaten von Poly(styrol-co-maleinsäure) in einem organischen Lösungsmittel auf die Innenwand der Röhre und Verdampfen lassen des organischen Lösungsmittels, gebildet wird.

45. Das Verfahren gemäß einem der Ansprüche 1 bis 44, wobei der Durchmesser der Öffnung des Trägers 0,02 mm bis 4 mm beträgt.

46. Das Verfahren gemäß Anspruch 1, wobei die mikroporige Halterung feste Teilchen umfasst, die miteinander verbunden sind.

47. Das Verfahren gemäß einem der Ansprüche 1 bis 46, wobei die mikroporige Halterung aus Polypropylen (PP), Propylen/Ethylen Copolymer, Polyvinylacetat, Polyamid, Polystyrol, Polyethylenterephthalat (PET), Polyetheretherketon (PEEK), Polycarbonat, Poly(vinylalkohol-co-ethylen), Polyester, Polyamid, Glas, Keramik, Quarz, Silicium, Siliciumnitrid, oder Gemischen davon, Stahl oder Kompositmaterialien davon mit Fasern oder Tragkörper aus Glas, Siliciumdioxid, Kohlenstoff oder Keramik gebildet ist.

48. Das Verfahren gemäß einem der Ansprüche 1 bis 47, wobei die mikroporige Halterung in Form einer Scheibe, eines Gitters, einer großporigen Membran, einer Membran mit Trägergewebe, einer Membran mit gewebten oder ungewebten Eigenschaften, einem Netz, einer Platte, eines Stabs oder eines Kegelstumpfs, vorliegt.

49. Das Verfahren gemäß einem der Ansprüche 1 bis 48, ferner umfassend den Schritt des Anordnens mindestens einer mikroporigen Membran auf der mikroporigen Halterung.

50. Das Verfahren gemäß Anspruch 49, wobei die mikroporige Membran aus (regenerierter) Cellulose, Polyamid, Polyester, Polypropylen (PP) oder Polytetrafluorethylen (PTFE) gebildet ist.

51. Eine Filtervorrichtung, umfassend einen Träger in Form einer Röhre mit einer Öffnung, einem mikroporigen Element, das in dem Träger über den Querschnitt der Öffnung vorliegt und erhältlich ist gemäß dem Verfahren zur Herstellung eines mikroporigen Elements wie in einem der Ansprüche 1 bis 50 definiert, als ein Filter und/oder Adsorptionsmaterial, und eine hydrophile Beschichtung, die die Innenwand der Röhre beschichtet, erhältlich gemäß dem Verfahren nach einem der Ansprüche 1 bis 50.

52. Die Filtervorrichtung gemäß Anspruch 51, wobei die flüssige Phase eine Lösung oder Suspension eines Polymers in einem Lösungsmittel und die Verfestigung in poröser Form durch die Einwirkung eines Nicht-Lösungsmittels des Polymers verursacht wird und wobei das Polymer an mindestes einem Teil der äußeren Oberfläche der mikroporigen Halterung anhaftet.

53. Ein Mehrkanalfilterelement, umfassend mehrere Filtervorrichtungen gemäß einem der Ansprüche 51 bis 52.

54. Verwendung einer Filtervorrichtung gemäß einem der Ansprüche 51 bis 53 zur Mikrofiltration, Fest-Flüssig-Trennung, zum Aufklaren von Lösungen, Sammeln von pro- und eukaryotischen Zellen, Entfernen und Reinigen von Zellfragmenten und Resten, Immobilisieren von Fragmenten, Viren und Plasmiden, Adsorption/Immobilisierung von Proteinen, Polypeptiden, Nukleinsäuren, Oligonukleotiden oder als Halterung für granuläres Material.

55. Verwendung einer Filtervorrichtung gemäß einem der Ansprüche 51 bis 53 für Affinitätschromatographie, Immunochromatographie, für Bindungsstudien, zur Isolierung von Multikomponenten-Bindungskomplexen, zum Screenen von Proben oder zur Vermeidung der Dislokation von Mikroteilchen.

56. Die Verwendung gemäß Anspruch 54 oder 55 zur Herstellung und/oder Detektion von Verbindungen die Nukleinsäuren, Oligonukleotide, Polypeptide oder Polysaccharide, Proteine, organische Verbindungen oder Derivate oder Analoga davon umfassen.

57. Die Verwendung gemäß Anspruch 56, wobei die Verbindung aus natürlichen oder nichtnatürlichen Quellen gewonnen ist.

## Revendications

1. Procédé de production d'un dispositif de filtre comprenant un support sous la forme d'un tube ayant une ouverture et un élément microporeux en tant que filtre et/ou matériau d'adsorption, **caractérisé en ce que** l'élément microporeux est généré à l'intérieur du support sur la section transversale de l'ouverture par un procédé comprenant les étapes de
a) application d'une substance en phase liquide qui est une solution ou une suspension d'un polymère ou une solution ou une suspension d'un ou de plusieurs monomères à un élément de retenue microporeux présent à l'intérieur du support ;
b) provocation de la solidification sous forme spongieuse d'au moins une partie de la substance ; et
c) revêtement de la paroi intérieure du tube d'un revêtement hydrophile ;
dans lequel l'élément de retenue microporeux contient dans ses pores ledit polymère de telle manière que les pores ont des interstices vides résiduels formant des canaux permettant l'écoulement d'un fluide à travers l'élément de filtre.

2. Procédé selon la revendication 1, dans lequel la phase liquide est une solution ou une suspension d'un polymère dans un solvant et la solidification sous forme spongieuse est provoquée par l'action d'un non-solvant pour le polymère.

3. Procédé selon la revendication 2, dans lequel le polymère est choisi dans le groupe constitué des esters polyvinyliques, des esters polyvinyliques partiellement désacylés, des dérivés cellulosiques, des polyamides, du polystyrène, du poly(méthacrylate de méthyle) et leurs mélanges.

4. Procédé selon la revendication 2 ou 3, dans lequel le polymère comprend à la fois des segments hydrophiles et hydrophobes au sein de ses molécules.

5. Procédé selon la revendication 4, dans lequel le polymère est choisi dans le groupe constitué du poly(alcool vinylique-co-éthylène), du poly(alcool vinylique-co-acétate de vinyle), d'un copolymère éthylène-acide acrylique, d'un copolymère éthylène-ester acrylique, d'un copolymère éthylène-acrylamide, d'un copolymère acide acrylique-acétate de vinyle, d'un copolymère acrylamide-acétate de vinyle, d'un copolymère monoamide de diamine d'acide acrylique avec l'acétate de vinyle, du poly(alccol vinylique-co-styrène), du poly(styrène-co-acide maléique) et du dérivé ester de glycérol, du copolymère acrylamide-ester acrylique, et leurs mélanges.

6. Procédé selon l'une quelconque des revendications 2 à 5, dans lequel le solvant est choisi dans le groupe constitué du diméthylsulfoxyde, du diméthylformamide, du diméthylacétamide, du formamide, de l'acide formique, de l'acide acétique, du 2,2,2-trichloroéthanol, du toluène, du tétrahydrofurane et leurs mélanges.

7. Procédé selon l'une quelconque des revendications 2 à 6, dans lequel le solvant comprend au moins deux non-solvants volatils.

8. Procédé selon la revendication 7, dans lequel ledit solvant peut être retiré à température ambiante ou sous vide.

9. Procédé selon l'une quelconque des revendications 2 à 8, dans lequel la solidification est obtenue par évaporation du solvant et/ou non-solvant.

10. Procédé selon l'une quelconque des revendications 2 à 9, dans lequel le non-solvant est choisi dans le groupe constitué de l'eau, des alcools ayant de 1 à 4 atomes de carbone, de l'ammoniaque, de l'acétate d'éthyle, de l'acétone, de l'éthylène diamine, et leurs mélanges.

11. Procédé selon la revendication 1, dans lequel la phase liquide est un hydrocolloïde.

12. Procédé selon la revendication 11, dans lequel l'hydrocolloïde est choisi dans le groupe constitué de l'agarose à bas point de fusion, l'amidon, l'alcool polyvinylique, et leurs mélanges.

13. Procédé selon la revendication 11 ou 12, dans lequel la couche de solution d'hydrocolloïde est soumise à réticulation par du tétraborate de sodium.

14. Procédé selon l'une quelconque des revendications 11 à 13, dans lequel l'hydrocolloïde solidifié est soumis à dessiccation et/ou réticulation.

15. Procédé selon la revendication 1, dans lequel la phase liquide est une solution ou une suspension d'un ou plusieurs monomères et la solidification est provoquée par la polymérisation dudit monomère.

16. Procédé selon la revendication 15, dans lequel le(s) monomère(s) est (sont) présent(s) dans un solvant.

17. Procédé selon la revendication 15 ou 16, dans lequel le(s) monomère(s) comprend (comprennent) un ou plusieurs monomères de réticulation.

18. Procédé selon la revendication 17, dans lequel lesdits monomères comprennent une diamine et un polyépoxyde.

19. Procédé selon l'une quelconque des revendications 15 à 18, dans lequel le monomère est choisi dans le groupe constitué des esters vinyliques, de l'acide acrylique et ses dérivés, et la polymérisation est effectuée sous l'influence de radicaux libres.

20. Procédé selon l'une quelconque des revendications 2 à 18, dans lequel on laisse un non-solvant, qui est miscible au solvant utilisé, se mélanger à la substance afin de provoquer la précipitation du polymère.

21. Procédé selon l'une quelconque des revendications 1 à 19, dans lequel la substance est imprégnée avec un non-solvant, qui est non miscible aux solvants utilisés.

22. Procédé selon la revendication 21, dans lequel le non-solvant est l'huile de silicone, l'eau ou l'air.

23. Procédé selon l'une quelconque des revendications 1 à 19, dans lequel la substance est imprégnée avec un hydrogel réversible ou des liquides qui sont insolubles dans l'eau à des températures supérieures à 20°.

24. Procédé selon la revendication 1, dans lequel la substance est un polymère thermoplastique et la solidification est provoquée par frittage, par exemple par chauffage ou par l'action d'un solvant.

25. Procédé selon la revendication 24, dans lequel le polymère est un copolymère styrène-acide maléique ou un polyacétate de vinyle.

26. Procédé selon l'une quelconque des revendications 1 à 25, dans lequel la substance comprend en outre des microparticules solides, poreuses ou non poreuses, d'une taille de 0,01 µm à 500 µm.

27. Procédé selon la revendication 26, dans lequel la substance et les microparticules sont présentes sous la forme d'une suspension dans un non-solvant de faible viscosité.

28. Procédé selon la revendication 27, dans lequel ladite substance et lesdites microparticules sont solidifiées par évaporation à partir d'une solution très diluée dans un solvant pauvre ou, par frittage à des températures modérées jusqu'à 130°C sans solution de polymère, en utilisant à la place uniquement le polymère partiellement fondu.

29. Procédé selon l'une quelconque des revendications 26 à 28, dans lequel lesdites microparticules modifient les propriétés d'adsorption de l'élément microporeux final.

30. Procédé selon l'une quelconque des revendications 26 à 29, dans lequel lesdites microparticules contiennent une molécule effectrice capable de séquestrer un ion, de se lier sélectivement à un support solide, de se lier à un déterminant antigénique présélectionné ou d'être un ligand.

31. Procédé selon la revendication 30, dans lequel ladite molécule comprend une enzyme ou un fragment détectable à distance.

32. Procédé selon la revendication 30 ou 31, dans lequel ladite molécule comprend une séquence d'acides aminés, des acides nucléiques ou des analogues ou dérivés de ceux-ci.

33. Procédé selon l'une quelconque des revendications 30 à 32, dans lequel ladite molécule capable de séquestrer un ion est la calmoduline, la métallothionéine, un fragment de celles-ci, ou une séquence d'acides aminés riche en au moins un parmi l'acide glutamique, l'acide aspartique, la lysine et l'arginine.

34. Procédé selon l'une quelconque des revendications 30 à 33, dans lequel ladite molécule effectrice capable de se lier à un déterminant antigénique présélectionné est un anticorps ou un fragment ou un dérivé de celui-ci.

35. Procédé selon l'une quelconque des revendications 30 à 34, dans lequel ladite molécule capable de se lier sélectivement à un support solide est la GST, l'étiquette His, la Lex-A.

36. Procédé selon l'une quelconque des revendications 30 à 35, dans lequel ledit ligand est Ni-NTA.

37. Procédé selon l'une quelconque des revendications 1 à 34, dans lequel la substance appliquée est auto-entretenue.

38. Procédé selon la revendication 37, dans lequel le support est imperméable à l'humidité.

39. Procédé selon l'une quelconque des revendications 1 à 37, dans lequel le support est en polypropylène (PP), polyéthylène (PE), copolymère propylène/éthylène, polyacétate de vinyle, polyamide, polystyrène, polyéthylène téréphtalate (PET), polyéther-éthercétone (PEEK), polycarbonate, polyéthylène-acétate de vinyle, poly(alcool vinylique-co-éthylène), polyester, polyamide, verre, céramique, quartz, nitrure de silicium, ou leurs mélanges, ou en matériaux composites de ceux-ci avec des fibres ou des trames de verre, de dioxyde de silicium, de carbone ou de céramique.

40. Procédé selon l'une quelconque des revendications 1 à 39, dans lequel l'élément microporeux est généré au bord ou près d'un bord du tube.

41. Procédé selon la revendication 40, dans lequel au moins une partie du tube est de forme conique, avec une extrémité en section transversale plus petite et une plus grande, et l'élément microporeux est généré à ou près de l'extrémité ayant la section transversale plus petite.

42. Procédé selon la revendication 40 ou 41, dans lequel l'étape d'application de la substance à l'ouverture est réalisée en laissant une solution monter dans le tube par action capillaire.

43. Procédé selon la revendication 1, dans lequel le bord du tube près de l'élément microporeux est maintenu dépourvu de revêtement hydrophile.

44. Procédé selon la revendication 1, dans lequel le revêtement hydrophile est formé en appliquant une solution d'un ou de plusieurs esters polyvinyliques ou dérivés polyols de poly(styrène-co-acide maléique) dans un solvant organique à la paroi intérieure du tube, en laissant le solvant organique s'évaporer.

45. Procédé selon l'une quelconque des revendications 1 à 44, dans lequel le diamètre de l'ouverture du support est de 0,02 mm à 4 mm.

46. Procédé selon la revendication 1, dans lequel l'élément de retenue microporeux comprend des particules solides liées les unes aux autres.

47. Procédé selon l'une quelconque des revendications 1 à 46, dans lequel l'élément de retenue microporeux est en polypropylène (PP), copolymère propylène/éthylène, polyacétate de vinyle, polyamide, polystyrène, polyéthylène téréphtalate (PET), polyéther-éthercétone (PEEK), polycarbonate, poly(alcool vinylique-co-éthylène), polyester, polyamide, verre, céramique, quartz, silicium, nitrure de silicium, ou leurs mélanges, en acier inoxydable, ou matériaux composites de ceux-ci avec des fibres ou des trames de verre, de dioxyde de silicium, de carbone ou de céramique.

48. Procédé selon l'une quelconque des revendications 1 à 47, dans lequel l'élément de retenue microporeux est sous la forme d'un disque, d'une grille, d'une membrane à larges pores, d'une membrane avec une étoffe de support, d'une membrane ayant des caractéristiques de tissé ou de non-tissé, de filet, de plaque, de tige ou de cône tronqué.

49. Procédé selon l'une quelconque des revendications 1 à 48 comprenant en outre l'étape de placement d'au moins une membrane microporeuse au niveau de l'élément de retenue microporeux.

50. Procédé selon la revendication 49, dans lequel la membrane microporeuse est en cellulose (régénérée), polyamide, polyester, polypropylène (PP) ou polytétrafluoroéthylène (PTFE).

51. Dispositif de filtre comprenant un support sous la forme d'un tube ayant une ouverture, un élément microporeux présent à l'intérieur du support sur la section transversale de l'ouverture et pouvant être obtenu par le procédé de génération d'un élément microporeux selon l'une quelconque des revendications 1 à 50 en tant que filtre et/ou matériau d'adsorption, et un revêtement hydrophile revêtant la paroi intérieure du tube pouvant être obtenu par le procédé selon l'une quelconque des revendications 1 à 50.

52. Dispositif de filtre selon la revendication 51, dans lequel la phase liquide est une solution ou une suspension d'un polymère dans un solvant et la solidification sous forme spongieuse est provoquée par l'action d'un non-solvant pour le polymère et dans lequel le polymère est fixé à au moins une partie de la surface extérieure de l'élément de retenue microporeux.

53. Elément de filtre multicanaux, comprenant une pluralité de dispositifs de filtres selon l'une quelconque des revendications 51 à 52.

54. Utilisation d'un dispositif de filtre selon l'une quelconque des revendications 51 à 53 pour la microfiltration, la séparation solide-liquide, la clarification de solutions, la récolte de cellules procaryotes et eucaryotes, l'élimination et la purification de fragments et de débris cellulaires, l'immobilisation de fragments, de virus et de plasmides, l'adsorption/immobilisation de protéines, polypeptides, acides nucléiques, oligonucléotides ou en tant qu'élément de retenue pour matériau granulaire.

55. Utilisation d'un dispositif de filtre selon l'une quelconque des revendications 51 à 53 pour la chromatographie d'affinité, l'immunochromatographie, pour des études de liaisons, l'isolation de complexes de liaison multicomposants, pour le criblage d'échantillons, ou pour prévenir la dislocation de microparticules.

56. Utilisation selon a revendication 54 ou 55 pour la préparation et/ou la détection de composés comprenant les acides nucléiques, les oligonucléotides, les polypeptides ou les polysaccharides, les protéines, les composés organiques, ou leurs dérivés ou analogues.

57. Utilisation selon la revendication 56, dans laquelle ledit composé est dérivé de sources naturelles ou non naturelles.
